# EUROPEAN PATENT APPLICATION

(11) **EP 2 023 249 A1**
(43) Date of publication of application: **11.02.2009**
(21) Application number: 06730147.3
(22) Date of filing: 27.03.2006
(51) Int. Cl.: G06F 11/36, G06F 11/28

(54) **VERIFICATION SUPPORT DEVICE, VERIFICATION SUPPORT METHOD, PROGRAM, AND RECORDING MEDIUM**

(30) Priority: 06.04.2005 JP 2005109603
(71) Applicant: Fukuoka Industry Science & Technology Foundation, Fukuoka-shi, Fukuoka 8100001 (JP)
(72) Inventor: MATSUMOTO, Michihiro, 8100001 (JP); YAMASHITA, Naohito, 8100001 (JP)
(74) Representative: Johnson, Terence Leslie
(86) International application number: PCT/JP2006/306199
(87) International publication number: WO 2006/109558

(57) **Abstract**

The purpose of this invention is to offer verification support device etc. which suit support of verification of change state data and relating data. In one embodiment there is provided a verification support device 1 having;
state transition with an abnormal condition data generating part 3 which adds the change state to an abnormal condition to change state data, and generates state transition with an abnormal condition data, State transition with an abnormal condition data inspection section 5 which inspects the state where it may reach by the change state from the initial state of a system based on state transition with an abnormal condition data and relating data.

## Description

### [Field of the Invention]

The invention relates to a verification support device etc. which supports verification of change state data and relating data of a subsystem and particularly concerns a verification support device, a verification support method, a program for making a computer perform the verification support method, and a recording medium that recorded the program.

### [Background of the Invention]

Operation of a system is described using the data which can specify changes of the state of a system, for example, as shown in a state transition diagram.
And verification of the state transition diagram etc. which were described is supported by the device which was indicated, for example to patent documents 1.

[Patent documents 1]
   JP,Heisei6-161759,A

### [Description of the Invention]

### [Problem(s) to be Solved by the Invention]

Operation of a system is described by the combination of the relating data which can specify the relation between the change state data which can specify each subsystem, for example, a before changing state as shown in a state transition diagram, an after changing state, and changes conditions, and a subsystem when a system is constituted by a plurality of subsystems.

However, when operation of a system was described by the combination of change state data and relating data, the device which supports these verification was not known.
Therefore, verification of change state data and relating data was made manually, comparing the change state data and relating data of all the subsystems.

Thus, when verification of change state data and relating data is made manually, a man-hour is required for the verification, and there are also very many check mistakes.
It is very difficult for the composition of a system to become complicated these days and to verify the change state data and relating data of all the subsystems manually.

Then, the purpose of the invention is to offer a verification support device which suits supporting verification of change state data and relating data, a verification support method, a program with possible making a computer perform the verification support method, and the recording medium that recorded the program.

### [Means for Solving the Problem]

According to the invention there is provided a verification support device which supports verification before changing state of plural subsystem, after changing state and condition changing data which can specify the changing condition and relation data which specify the relation between relation of subsystem, having;
a change state data generation means with an abnormal condition which adds automatically the data which can specify the change state to an abnormal condition to said change state data, and generates change state data with an abnormal condition,
The state transition with an abnormal condition data inspection means which inspects the state where it may reach by the change state from the initial state of a system based on said state transition with an abnormal condition data and said relating data

Using the invention, the state where a state transition with an abnormal condition data inspection means may reach is inspected.
For example, the following things can say by inspecting the reachability to an abnormal condition.

For example, a description person of a state transition diagram usually describes a state transition diagram of each subsystem, visualizing operation of a whole system.
However, in the case of a complicated system, many subsystems exist.
Therefore, it is very difficult to grasp the generating timing of event ignition completely.
Namely, some acceptable events are not accept by any means depending on how to combine a subsystem.
For example, the system is made of combination of subsystem 1 and subsystem 2.
And the acceptable events of state 1 of subsystem 1 are e1 and e2, and only e1 can ignite in subsystem 2.
In this combination, e2 is an acceptable event which is not received by any means in the state of 1 of subsystem 1.
On the contrary, there are some which are received apparently, and are received although it does not seem to be.
In order to reduce memories, reducing processing when receiving the former is often performed.
It may often happen to mistake the latter for the former and to reduce processing by this (latter event, i.e., unexpected acceptable event, should come).
Therefore, it is necessary for a description person of a state transition diagram to perform that verification which is not reducing processing at the time of acceptance of an acceptable event.

For example, when reusing the present subsystem and creating a new system, behavior of the exterior differs in a use situation original and a new use situation, in view of the subsystem reused.
Therefore, in a new system, an unexpected event may be received and a subsystem may exhibit unexpected behavior.
Therefore, verification of a possibility that an unexpected event will be received and a subsystem will do an unexpected operation is also needed.
If the present subsystem is reused and a new system is created, how to combine a subsystem will change.
Therefore, it may also happen that an acceptable event which was not received by any means in the present system receives in a new subsystem (reach an abnormal condition).
For example, the present system is made of combination of subsystem 1 and subsystem 2, and acceptable events of state 1 of subsystem 1 are e1 and e2, and only e1 can ignite in subsystem 2.
In this combination, e2 is an acceptable event which is not received by any means in the state of 1 subsystem 1.
The new system is made of combination of subsystem 1 and subsystem 3, and it assumes that e2 can ignite in every state, in subsystem 3.
At this time, e2 becomes an acceptable event received at state 1 of subsystem 1 in a new system.
In order to reduce memories, in the present system, processing when receiving the acceptable event which is not received by any means may be reduced.
In such a case, in a new system, when this acceptable event occurs, the problem that the processing which should be performed is not described occurs.
When reusing the present subsystem and creating a new system, it is necessay to verify whether this problem occurs.

On the other hand using the invention and reachability to an abnormal condition can be inspected
namely, a state transition with an abnormal condition data generation means is related with the before changing state of a subsystem and the combination of changes conditions based on the described state transition diagram which are not specified with change state data, for example,
add the data which can specify the change state which makes an abnormal condition an after changing state to change state data, and state transition with an abnormal condition data is generated,
by inspecting a possibility that a state transition with an abnormal condition data inspection means will reach an abnormal condition by the change state from the initial state of a system,
for example, it becomes possible that verification for which description persons, such as a state transition diagram, did not reduce processing at the time of acceptance of an acceptable event, for example, it becomes possible to verify a possibility that an unexpected event will be received and a subsystem will carry out unexpected operation.

In the invention, the state where a change state data inspection means with an abnormal condition may reach is inspected,
For example, it may possible to be a change state data inspection means with an abnormal condition inspects the before changing state which may reach the change state from the initial state and an after changing state of a system.

Using the invention, the state where a change state data inspection means with an abnormal condition may reach is inspected,
and for example, the following things can say by inspecting a state where a change state data inspection means with an abnormal condition cannot reach by a change state from an initial state of a system, or inspecting a changes conditions which cannot have been satisfied.

When a system is created by combining plural subsystems together, a certain acceptable event may not be received in the state in a certain subsystem.
Some acceptable events are not received by any means depending on how to combine a subsystem.
For example, it is assumed that the system is made of combination of subsystem 1 and subsystem 2, the acceptable events of state 1 of subsystem 1 are e1 and e2, and only e1 can ignite in subsystem 2.
In this combination, e2 is an acceptable event which is not received by any means in the state 1 of subsystem 1.
At this time, processing of that acceptable event in this state becomes useless, and it becomes possible to reduce the amount of memories of a system by deleting this processing.
Similarly, the state where it cannot reach by a change state from an initial state may exist.

On the other hand, using the invention, for example, it becomes possible to verify existence of an event without the state where there is no reachability, or acceptance possibility, by inspection of a change state data inspection means with an abnormal condition, and for example, by inspecting a state where a change state data inspection means with an abnormal condition cannot reach by a change state from an initial state of a system, or changes conditions which must have been satisfied.

The invention as defined in Claim 2 is a verification support device which supports verification of a before changing state of plural subsystems which constitute a system, change state data which can specify an after changing state and changes conditions and relating data which can specify the relation between subsystems;
the data which can specify the change state it was presupposed that could not be produced by a system designer is not contained in said change state data,
or it is contained identifiable to the data which can specify the change state it was presupposed that the data which can specify the change state it was presupposed that could not be produced by a system designer might arise by a system designer,
the data which can specify the combination of a state acceptable about each event of event groups and said event groups as said relating data is contained,
receiving the event concerned to said change state data about each event of said event groups is a change condition,
and when it is supposed that the change state which makes the state which can receive the event concerned a before changing state cannot arise by a system designer,
receiving the event concerned to said change state data into change conditions,
a state which can receive the event concerned is made into a before changing state, and it has the following:
The change state data generation means with an abnormal condition which adds automatically the data which makes an abnormal condition an after changing state, and generates change state data with an abnormal condition.
The change state data inspection means with an abnormal condition which inspects the state where it may reach by the change state from the initial state of a system based on said change state data with an abnormal condition, and said relating data.

The invention defined in Claim 3 is the verification support device defined in claim 2, and the data which can specify the change state group which changes simultaneously as said relating data is contained, said change state data inspection means with an abnormal condition having;
a compound change state data inspection means which inspects the state where it may reach by changes of the state from the initial state of a system, based on compound change state data, with the data which can specify the change state judged that it may produce by said system designer, and said change state data generation means with an abnormal condition, based on data which can be specified, data and a change state group which changes simultaneously to an added abnormal condition which can specify a change state with a change state from an initial state of a system, and a compound change state data generation means which generates compound change state data which can specify a front [ changes ] state which may reach, an after-changes state, and change conditions which may be satisfied.

The invention defined in Claim 4 is the verification support device defined in claim 3,said compound change state data inspection means having an abnormal condition reachability inspection means which judges whether an abnormal condition is included in said state where it may reach.

By an invention defined in claim 4, by inspecting the reachability to an abnormal condition for example, it is possible to inspect that a person who described a verificated description, failed or not to describe a processing when receiving an acceptable event.

The invention defined in Claim 5 is a verification support device which supports verification of the change state data which can specify the before changing state of plural subsystems when a system is constituted, an after changing state, and changes conditions, and the relating data which can specify the relation between subsystems and having
the data which can specify the change state group which changes simultaneously as said relating data is contained,
a change state data generation means with an abnormal condition which adds the data which can specify the change state to an abnormal condition to said change state data, and generates change state data with an abnormal condition,
a change state data inspection means with an abnormal condition which inspects the state where it may reach by the change state from the initial state of a system based on said change state data with an abnormal condition, and said relating data,
having a display control means on which information is displayed to a display, and said change state data inspection means with an abnormal condition, having a compound change state data generation means which generates the compound change state data which can specify the before changing state which may reach, an after changing state, and the changes conditions which may be satisfied, based on the data which can specify the change state group which changes simultaneously, and said change state data with an abnormal condition, with the change state from the initial state of a system, and the compound change state data inspection means which inspects the state where it may reach by changes of the state from the initial state of a system based on compound change state data, and the abnormal condition reachability inspection means which judges whether an abnormal condition is included in said state where it may reach said display control means, when it is judged that an abnormal condition is included by said abnormal condition reachability inspection means, the information which shows the change state near an abnormal condition among the change states from an initial state to an abnormal condition to a display is given priority to and displayed.

An invention defined in Claim 6 is the verification support device defined in claim 5, and has the following;
a trivial changes distinction means by which said display control means distinguishes the change state specified as an important change state among the change states to an abnormal condition, and the other change state.

By this composition, for example, said abnormal condition reachability inspection means generates the problem state changes sequence which is a change state sequence which reaches an abnormal condition from an initial state when an abnormal condition may be reached by the change state from an initial state,
said trivial changes distinction means makes what is contained in the change state group specified as an important change state among said problem state changes sequences an important change state,
making into a trivial change state what is not contained, said display method displays said problem state changes sequence in an order from the change state to an abnormal condition, distinguishing an important change state and a trivial change state.
For example, an important change state is displayed in black, and a trivial change state is displayed in yellow.
Therefore, a thing about a change state group that is not getting a user's interest is distinguishable.
And in many cases, it becomes easy for a user to discover a problem by displaying a change state sequence near the abnormal condition which looks for a problem.
A display method may display only an important change state, without displaying a trivial change state.

The invention defined in Claim 7 is the verification support device defined in claim 3 or 4, in which;
said compound change state data inspection means has an acceptable event refusal-of-receipt inspection means which judges whether the data about an event without the state which does not have reachability in said change state data, or acceptance possibility is contained.

According to the invention defined in Claim 7, it becomes possible to verify existence of the event which has neither the state where there is no reachability, nor acceptance possibility, as mentioned above, for example.

An invention defined in claims 1 to 7, for example, a change state data may be a state transition diagram.
The change state data may be a State chart and Kripke structure.

The invention defined in Claim 8 is a verification support device defined in any of Claims 2, 3, 4, and 7;
in the state to the combination of the event which may be produced in the state where said subsystem can take, and said subsystem,
the processing by the event is provided with the change state data generation means which generates said change state data based on the event processing data which can specify the processing performed when the event occurs in not existing or its state,
said change state data generation means with an abnormal condition generates change state data with an abnormal condition based on change state data generated by said change state data generation means.

An invention defined in Claim 9 is the verification support device defined in claim 8, said event processing data being data corresponding to a state transition table, and said change state data is data corresponding to a state transition diagram.

According to the invention defined in Claims 8 and 9, the user of a verification support device, for example with a state transition table etc.,
by directing also about the event considered that there is not only processing but no generating possibility to the event which is generating possibility, and it is considered that is in the state where a subsystem can only take,
by enabling the user itself to verify with a manual about the change state of a subsystem, and verifying by a verification support device generating a state transition diagram etc. further,
a man day can be reduced as compared with the user itself performing by manual verification based on a state transition table, and correctness can be raised.

The invention defined in Claim 10 consists of a verification support method which supports verification of relating data which can specify the relation between the change state data which can specify the before changing state of two or more subsystems which constitute a system and an after changing state and changes conditions, and a subsystem, and having;
the step which a change state data generation means with an abnormal condition adds automatically the data which can specify the change state to an abnormal condition to said change state data, and generates change state data with an abnormal condition,
the step which inspects the state where a change state data inspection means with an abnormal condition may reach by the change state from the initial state of a system based on said change state data with an abnormal condition and said relating data is included.

The invention defined in Claim 11 is a program with possible making a computer perform the verification support method defined in claim 10.

The invention defined in Claim 12 is the recording medium which recorded the program defined in claim 11 so a computer can be run.

A verification support device which supports verification of related data which can specify the relation between the change state data which can specify the before changing state of a subsystem, an after-changes state, and changes conditions, and a subsystem as other verification support devices having;
the change state data generation means with an abnormal condition which adds the data which can specify the change state to an abnormal condition to said change state data based on said change state data and said relating data, and generates change state data with an abnormal condition,
the change state data inspection means with an abnormal condition which inspects the state where it may reach by the change state from the initial state of a subsystem based on said change state data with an abnormal condition.

### [Effect of the Invention]

According to the invention, it becomes possible unlike verification manually, to automate verification of change state data and relating data, and to raise accuracy, and to support by inspecting the state where a change state data inspection means with an abnormal condition may reach by the change state from the initial state of a system.
The invention is hereinafter described, by way of example in the accompanying schematic drawings.

### [Brief Description of the Drawings]

Fig. 1 is a schematic block diagram of verification support device 1 concerning an embodiment of the invention.
Fig. 2 is a block diagram of state transition diagram verification support device 11 which is one of the examples of verification support device 1 of Fig. 1.
Fig. 3 is a figure showing an example of the system which is the verification target of state transition diagram verification support device 11 of Fig. 2.
Fig. 4 is a flow chart showing operation of state transition diagram generation part 13 with an abnormal condition of Figure 2.
Fig. 5 is a figure showing a part of change state storing file of subsystem B of Fig. 3, system cooperation method, and the example of an acceptable state table file.
Fig. 6 is a figure showing the example of the change state storing file the inspection table created by processing of Fig. 4 and for state transition diagram storing with an abnormal condition.
Fig. 7 is a figure showing the example of the state transition diagram with an abnormal condition created by processing of Fig. 4.
Fig. 8 is the 1st flow chart showing operation of compound state transition diagram generation part 17 of Fig. 2.
Fig. 9 is the 2nd flow chart showing operation of compound state transition diagram generation part 17 of Fig. 2.
Fig. 10 shows a change state storing file for state transition diagram storing with an abnormal condition used in processing of Figs. 8 and 9, a synchronizing state execution changes group storing file, and a figure showing the example of the normal body surface which can be reached.
Fig. 11 is a Figure showing the example of the compound state transition diagram generated.
Fig. 12 is a figure showing the detailed example of processing of Step STCC11 of Fig. 9.
Fig. 13 is Fig. 1 showing the detailed example of processing of Step STCC14 of Fig. 9.
Fig. 14 is Fig. 2 showing the detailed example of processing of Step STCC14 of Fig. 9.
Fig. 15 is Fig. 3 showing the detailed example of processing of Step STCC14 of Fig. 9.
Fig. 16 is Fig. 4 showing the detailed example of processing of Step STCC14 of Fig. 9.
Fig. 17 is a flow chart showing operation of abnormal condition reachability inspection section 23 of Fig. 2.
Fig. 18 is a Fig. showing the example it is made to output the change state sequence which changes processing of step STCH6 of Fig. 17 and goes from an initial state to an abnormal condition.
Fig. 19 is a Fig. showing the example of the change state storing table created in processing of Fig. 18.
Fig. 20 is a flow chart showing an example of operation of trivial changes distinction part 27 of Fig. 2.
Fig. 21 is a Fig. showing the example of an indication of indication area 21 of Fig. 2.
Fig. 22 is the 1st flow chart showing operation of acceptable event refusal-of-receipt inspection section 25 of Fig. 2.
Fig. 23 is the 2nd flow chart showing operation of acceptable event refusal-of-receipt inspection section 25 of Fig. 2.
Fig. 24 is a Fig. showing the example of the state transition diagram of subsystems D and E, an acceptable state table file, a compound state transition diagram, and the change state storing file for compound state transition diagram storing which constitutes the system of processing of Fig. 23 to be examined.
Fig. 25 is a block diagram showing other examples of state transition diagram verification support device 11 of Fig. 2.
Fig. 26 is a block diagram showing other examples of state transition diagram verification support device 11 of Fig. 2.
Fig. 27 is a Fig. showing the change state of the queue of 1.
Fig. 28 is an example of the compound state transition diagram at the time of assuming that a model can be made as are subsystem A of Fig. 3, and B and C, and the queue of length 1 is among subsystems B and C and an event is held at this queue.
Fig. 29 is a flow chart showing other examples of operation of state transition diagram generation part 13 with an abnormal condition of Fig. 2.
Fig. 30 is a Fig. showing the example of the state transition diagram of subsystem F which is an example of Fig. 29 processing, a change state storing file, and an acceptable state table file.
Fig. 31 is a Fig. showing the example of the change state storing file inspection table A, B, and C created in each processing of Fig. 30, and for state transition diagram storing with an abnormal condition.
Fig. 32 includes inspection table D created in each processing of Fig. 30, a change state storing file for state transition diagram storing with an abnormal condition, and a figure showing the example of a state transition diagram with an abnormal condition.
Fig. 33 is a block diagram showing change state data verification support device 45 which is one of everything [ the ] but the example of verification support device 1 of Fig. 1.
Fig. 34 is a Fig. showing the example of a state transition table.
Fig. 35 is a Fig. showing the example of the state transition table of subsystems G and H which constitute a system to be examined and this system.
Fig. 36 is the 1st flow chart showing operation of state transition table 43 of Fig. 33.
Fig. 37 is the 2nd flow chart showing operation of state transition table 43 of Fig. 33.
Fig. 38 is an example of the state transition diagram generated by processing of Fig. 36 and Fig. 37.
Fig. 39 is an example of the state transition diagram with an abnormal condition generated based on the state transition diagram of Fig. 38.
Fig. 40 is an example of the compound state transition diagram generated based on the state transition diagram with an abnormal condition of Fig. 39.
Fig. 41 is a block diagram showing other examples of a state transition diagram inspection support device.
Fig. 42 is the 1st flow chart showing the example of operation of state inspection section 53 of Fig. 41 which can be reached.
Fig. 43 is the 2nd flow chart showing the example of operation of state inspection section 53 of Fig. 41 which can be reached.
Fig. 44 is a Fig. showing the example of the change state description table created in processing of Fig. 42.
Fig. 45 is a flow chart showing other examples of operation of state inspection section 53 of Fig. 41 which can be reached.
Fig. 46 is a flow figure showing other examples of operation of state inspection section 53 of Fig. 41 which can be reached.

### [Description of Notations]

1 Verification Support Device
3 Change State Data Generating Part with Abnormal Condition
5 Change State Data Inspection Section with Abnormal Condition
11 State Transition Diagram Verification Support Device
13 State Transition Diagram Generation Part with Abnormal Condition
15 State Transition Diagram Inspection Section with Abnormal Condition
17 Compound State Transition Diagram Generation Part
19 Compound State Transition Diagram Inspection Section
23 Abnormal Condition Reachability Inspection Section
25 Acceptable Event Refusal-of-Receipt Inspection Section
45 Change State Data Verification Support Device
47 State Transition Table Conversion Part

The term used in introduction and this application is explained.

First, a system is a combination of hardware and software, hardware, and software, for example.
A portion which constitutes a system is also called a system (subsystem).

Next, a state is in the state which a system can take.
The initial value of a state is called initial state.
Changes of a state are called change state.
Change states include an active change state and a passive change state.
An active change state is a change state which changes actively, when the system operates alone.
As an example of an active change state, there are event ignition, internal processing, environmental event acceptance (for example, since the timing of event ignition is uncontrollable by a system, the event from the user of a system may always be generated), etc.
A passive change state is a change state which changes passively, when the system operates alone.
There are non-environmental event acceptance etc. as an example of a passive change state.

Next, a state transition diagram is a figure expressed with a state and a change state, and it is used in order to describe operation of a system.

Next, the system cooperation method shows the cooperation method between subsystems.
Specification of the acceptable state of each subsystem and specification of the change state group which changes simultaneously are included in the system cooperation method.
The only active change state and one or more passive change states are contained in the change state group which changes simultaneously, for example.
When a subsystem cooperates, a subsystem may cooperate through the medium by which behavior becomes settled with state transition diagrams, such as a queue.

Next, a stimulus from the exterior or the inside of a system is called event.
It is called event ignition that a system ignites an event of externally or internally.
An environmental event ignition which ignites an event to the environment besides systems, such as a user of a system, and the non-environmental event ignition which ignites an event to the other subsystems of the same system are included in event ignition.
It is called event acceptance that a system receives the event which came from the exterior or an inside.
An environmental event acceptance which receives the event which comes from the environment besides systems, such as a user of a system, and the non-environmental event acceptance which receives the event which comes from the other subsystems of the same system are included in event acceptance.
Processing of event ignition and processing other than event acceptance which systems performs are called internal processing.

Next, an acceptable state is in the state where event groups are acceptable in the state of a system.
In the acceptable state of event groups with a system, an acceptable event is an event contained in the event groups.

Next, action means the processing which a system carries out after event acceptance, and event ignition, internal processing, etc. are included.
State change action which changes the state of a system is contained in action.

### [Embodiment 1]

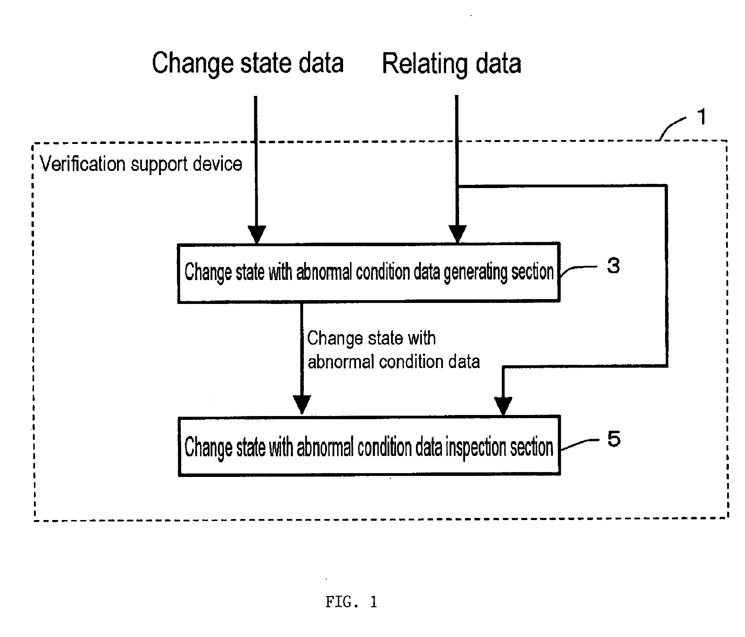

Fig. 1 is a schematic block diagram of verification support device 1 relating to an embodiment of the invention.

Verification support device 1 is provided with change state data generating part 3 with an abnormal condition, and change state data inspection section 5 with an abnormal condition.

Change state data generating part 3 with an abnormal condition generates change state data with an abnormal condition adding before changing state of a subsystem, an after-changes state, and changes conditions and the change state to an abnormal condition is added to the change state data which can specify.

Change state data inspection section 5 with an abnormal condition generates an inspection result based on the relating data which can specify the relation (henceforth the cooperation method) between the change state data with an abnormal condition generated by change state data generating part 3 with an abnormal condition, and a subsystem, the change state from the initial state of a system is inspected.

### [Embodiment 2]

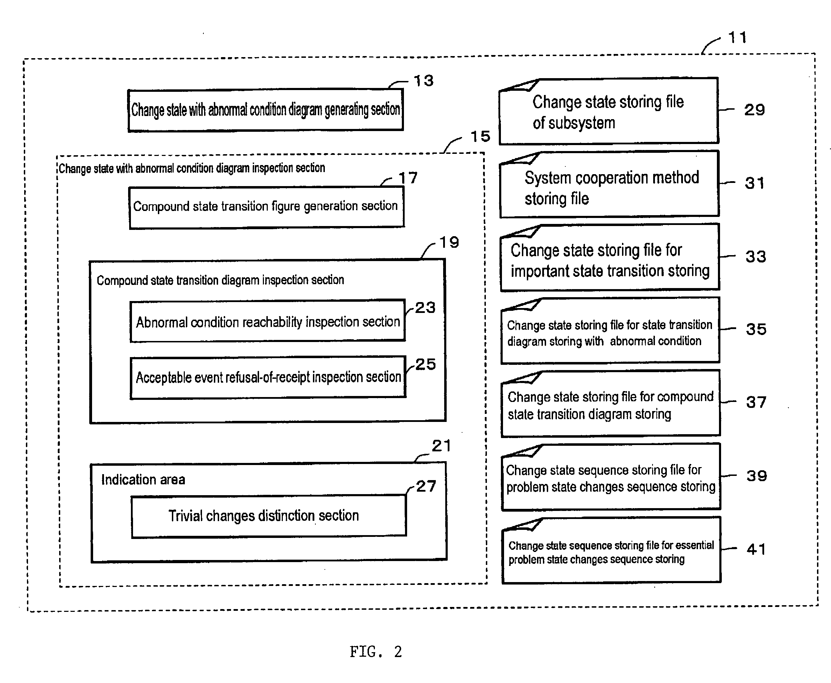

State transition diagram verification support device 11 of Fig. 2 is one of the examples of verification support device 1 of Fig. 1.
In Fig. 2, state transition diagram generation part 13 with an abnormal condition and state transition diagram inspection section 15 with an abnormal condition are equivalent to change state data generating part 3 with an abnormal condition of Fig. 1, and change state data inspection section 5 with an abnormal condition, respectively.

State transition diagram inspection section 15 with an abnormal condition has compound state transition diagram generation part 17, compound state transition diagram inspection section 19, and indication area 21.
Compound state transition diagram inspection section 19 has abnormal condition reachability inspection section 23 and acceptable event refusal-of-receipt inspection section 25.
Indication area 21 has trivial changes distinction part 27.

State transition diagram verification support device 11 includes, change state storing file 29 of a subsystem, a system cooperation method storing file 31, change state storing file 33 for important change state storing, change state storing file 35 for state transition diagram storing with an abnormal condition, change state storing file 37 for compound state transition diagram storing, change state sequence storing file 39 for problem state changes sequence storing, and change state sequence storing file 41 for essential problem state changes sequence storing.

Here, the data in which change state storing file 29 of a subsystem stores data which can specify the state transition diagram of a subsystem.
The data in which the system cooperation method storing file 31 stores data which can specify the cooperation method between subsystems.
An important change state storing file 33 stores data which can specify a change state group with a user's interest.

Each of change state storing file 35 for state transition diagram storing with an abnormal condition and change state storing file 37 for compound state transition diagram storing, change state sequence storing file 39 for problem state changes sequence storing, change state sequence storing file 41 for essential problem state changes sequence storing are stored, state transition diagram generation part 13 with an abnormal condition, compound state transition diagram generation part 17, abnormal condition reachability inspection section 23, and the data which can specify the processing result of trivial changes distinction part 27.

In Figure 2, state transition with an abnormal condition chart generation part 13 generates the state transition with an abnormal condition diagram of a subsystem based on the data stored in change state storing file 29 of a subsystem, and the system cooperation method storing file 31.
The data which can specify the generated state transition with an abnormal condition diagram is stored in change state storing file 35 for state transition with an abnormal condition chart storing.

Compound state transition diagram generation part 17 generates a compound state transition diagram based on the data stored in change state storing file 35 for state transition with an abnormal condition diagram storing, and the system cooperation method storing file 31.
Here, a compound state transition diagram is a diagram expressed with the state of making into a system-wide initial state the state of consisting of an initial state of each subsystem, and changing from a system-wide initial state, and a change state.
The data which can specify the generated compound state transition diagram is stored in change state storing file 37 for compound state transition diagram storing.

Abnormal condition reachability inspection section 23 inspects a possibility of reaching an abnormal condition by the change state from a system-wide initial state, based on the data stored in change state storing file 37 for compound state transition diagram storing.
When an abnormal condition may be reached, the change state sequence (problem state changes sequence) to an abnormal condition is generated, and the data which can specify this problem state changes sequence is stored in change state sequence storing file 39 for problem state changes sequence storing.

Acceptable event refusal-of-receipt inspection section 25 inspects an event that is specified as the event acceptable by the system cooperation method of the system cooperation method storing file 31, however, it is not received when the whole system operates.

Trivial changes distinction part 27 removes what is not related to the change state column group which has a user's interest among problem change state sequences, and generates an essential problem change state sequence, by based on the data stored in change state sequence storing file 39 for problem change state sequence storing, and change state storing file 33 for important change state storing.
The data which can specify the generated essential problem state changes sequence is stored in change state sequence storing file 41 for essential problem state changes sequence storing.

Indication area 21 displays the inspection result of compound state transition diagram inspection section 19.
About a problem state changes sequence, it may display based on the data stored in change state sequence storing file 39 for problem state changes sequence storing, and change state sequence storing file 41 for essential problem state changes sequence storing, distinguishing an important change state and a trivial change state.

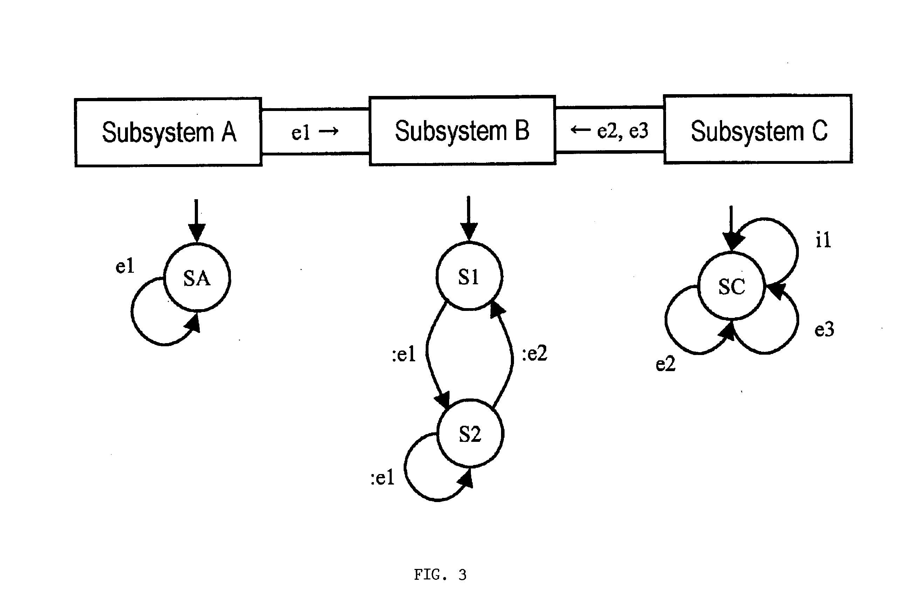

Fig. 3 is a figure showing an example of the system which is the verification target of state transition diagram verification support device 11 of Fig. 2.

In Fig. 3, the system used as the candidate for verification consists of three subsystems A, B, and C.
In Fig.3, an arrow means changes of a state, sign e1 ... mean ignition of event e1 ..., respectively, and sign: e1 ... mean acceptance of event e1 ..., respectively.

The initial state of subsystem A is SA.
Subsystem A ignites and sends event e1 to subsystem B, and changes to state SA (since the state before changes is state SA, the state after changes is also still state SA).
The change state of subsystem A is only event ignition (active change state) of event e1.

The initial state of subsystem C is SC.
Subsystem C ignites and sends event e2 and e3 to subsystem B, and changes to state SC (since the state of before changing is in state SC, a state is still state SC even after event ignition).
In Fig. 3, i1 is the internal processing of subsystem C.
The change states of subsystem C are only event ignition (active change state) of e2 and e3, and the internal processing (active change state) of i1.

The initial state of subsystem B is S1.
Subsystem change in the state S2 from state S1 when it receive an event e1 and it changes state S2 from state S2 when it receives an event e1. (Since the state before changes is in state S2, the state after changes is also still state S2)
Subsystem B will change to state S1, if event e2 is received in state S2.
The change state of subsystem B is only event acceptance (passive change state) of events e1 and e2.

Then, in this system, events e2 and e3 ignite at the gap slowly carried out compared with the ignition gap of event e1, and assume that the state of subsystem B in case events e2 and e3 are sent is S2.

In this case, following three can be considered as the cooperation method (the system cooperation method) between the subsystems in this system.
The 1st is that subsystems A and C do not have an acceptable state.
The 2nd, states S1 and S2 of subsystem B are in the acceptable state of an event {e1}, and state S2 is in the acceptable state of event groups {e2, e3}.
The 3rd is generating simultaneously event ignition (active change state) and event acceptance (passive change state) of the event of the same name.

At this time, there is no acceptable event of state SA of subsystem A in this system.
The acceptable event of state S1 of subsystem B is an event {e1}.
The acceptable events of state S2 are event groups {e1, e2, e3}, and there is no acceptable event of state SC of subsystem C.

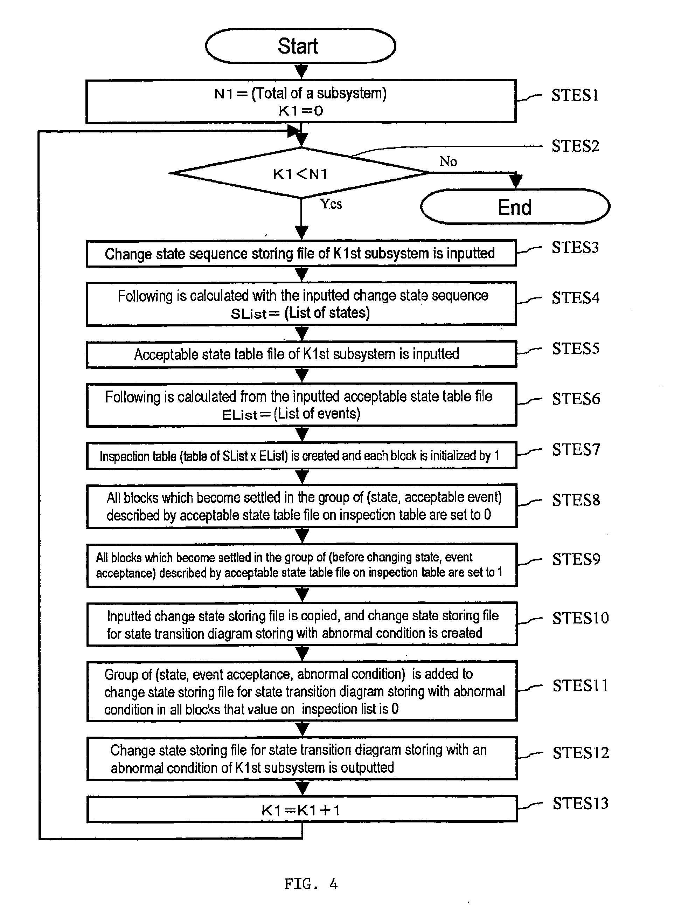

Figure 4 is a flow chart showing operation of state transition with an abnormal condition diagram generation part 13.

First, state transition with an abnormal condition diagram generation part 13 makes N1 the total of a subsystem, and sets K1 to 0 (step STES1 of Figure 4).
In the example of Fig. 3, since a subsystem is three, A, and B and C, N1 is 3.

Next, state transition with an abnormal condition diagram generation part 13 judges by comparing the value of K1 and N1 (step STES2 of Figure 4).
If the value of K1 is smaller than the value of N1, step STES3 of Fig. 4 will be processed, and if not small, processing of Fig. 4 will be ended.

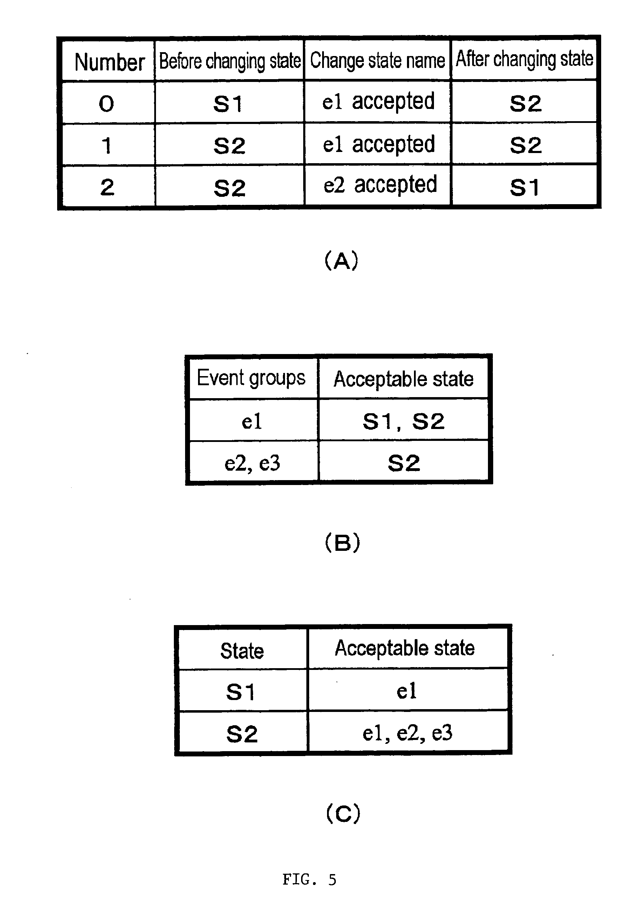

In step STES3 of Figure 4, state transition with an abnormal condition diagram generation part 13 inputs K1st change state storing files of a subsystem from a change state storing file 29 of the subsystem.
A change state storing file is as in the case of subsystem B, it is shown in (A) of Fig. 5.
In (A) of Fig. 5, a change state storing file is provided with the group of an after-changes state which is in the before changing state which is in the state in front of a change state, the change state name which are the conditions of a change state, and the state after a change state, and each class is identifiable by the number which begins from 0.
The state before changes of the group identified by number 0 presupposes that it is an initial state of a system.

State transition with an abnormal condition diagram generation part 13 sets the list of the states where it is calculated from the inputted change state storing file to SList (step STES4 of Fig. 4).
In the case of subsystem B, it is SList= {S1, S2}.

Then, the acceptable state table file of a K1 position subsystem is inputted (step STES5 of Fig. 4).
Here, an acceptable state table file is created by changing a part of system cooperation method storing file 31 into an equivalent data structure.
In the case of subsystem B, the group with the acceptable state of the event groups as shown in (B) and event groups of Fig. 5 is specified to a part of system cooperation method file 31.
An acceptable state table file is obtained by changing a part of system cooperation method storing file 31 into a group with an event acceptable in a state and the state concerned, as it is in (C) of Fig. 5, for example.

Then, the list of events calculated from the inputted acceptable state table file is set to EList (step STES6 of Fig. 4).
In (C) of Fig. 5, it is EList= {e1, e2, e3}.

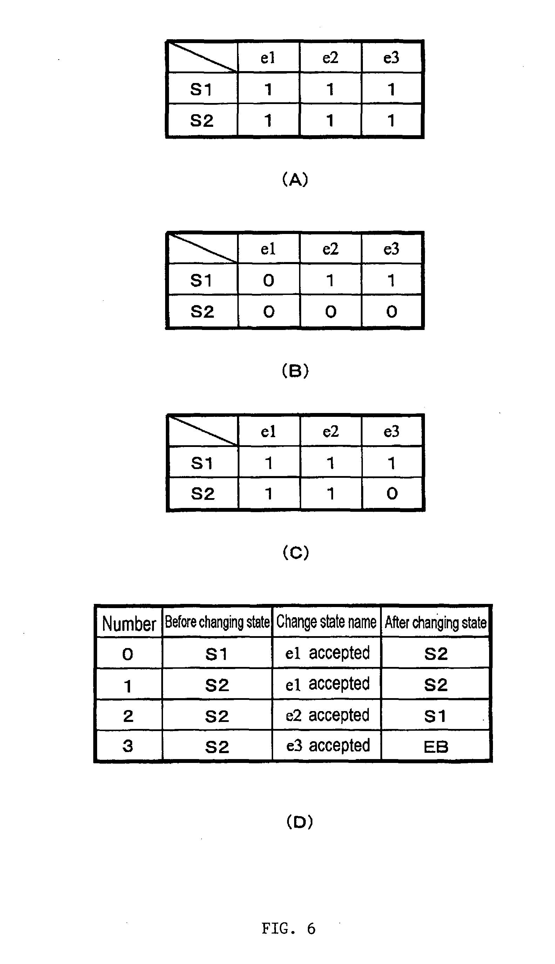

Then, the inspection table which consists of a block which uses a vertical axis as the element of SList and becomes settled in the group of the element of SList and the element of EList considering a horizontal axis as an element of EList is created, and each block is initialized by 1 (step STES7 of Fig. 4).
The inspection table created here becomes as shown in (A) of Fig. 6.

Then, all the blocks on the inspection table which becomes settled in the group of the state where it was described by the acceptable state table file, and an acceptable event are set to 0 (step STES8 of Fig. 4).
The inspection table created here becomes as shown in (B) of Fig. 6.

Then, all the blocks which become settled in the group of the state before changes described by the change state storing file on an inspection table and a change state name are set to 1 (step STES9 of Fig. 4).
However, nothing is done when change state names are event ignition and internal processing.
The inspection table created by processing of step STES9 of Fig. 4 becomes as shown in (C) of Fig. 6.
A group of the state corresponding to the block of zero on the inspection table of (C) of Fig. 6, and an event are not specified for a change state storing file, although the event concerned is acceptable and in the state concerned in the acceptable state table file, the change state when receiving the event concerned in the state concerned.

Then, the inputted change state storing file is copied and change state storing file 35 for state transition with an abnormal condition diagram storing is created (step STES10 of Figure 4).

Then, when the value on an inspection table receives the event which corresponds to change state storing file 35 for state transition with an abnormal condition diagram storing in the state corresponding to each block to all the blocks of 0, it changes to an abnormal condition. (that is, (acceptance of the state of corresponding, and a corresponding event, and the group of abnormal condition)) are added (step STES11 of Fig. 4).
As for the block of 0, in (C) of Fig. 6, the value on an inspection table corresponds to the group of state S2 and event e3.
Therefore, as it is in (D) of Figure 6, change state storing file 35 for state transition with an abnormal condition diagram storing sets a before changing state to S2, considers a change state name as acceptance of event e3, adds the group which sets an after changing state to abnormal condition EB, and is created.

Then, state transition diagram storing file 35 for state transition with an abnormal condition diagram storing of a K1 position subsystem is outputted (step STES12 of Figure 4), the value of K1 is increased one time (step STES13 of Figure 4), and it returns to judgment processing of step STES2 of Figure 4.

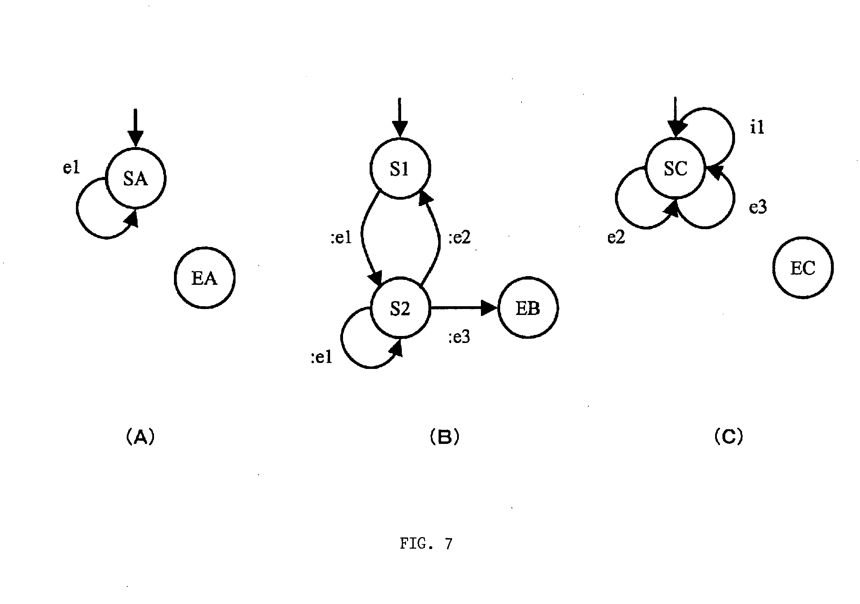

Based on the state transition diagram and the system cooperation method of a subsystem, the state transition with an abnormal condition diagram of each subsystem is generated by the above processing.
The state transition with an abnormal condition diagram of subsystem A, B, and C becomes as shown in (A) of Figure 7, (B), and (C), respectively.
In Figure 7, states EA, EB, and EC are abnormal conditions of subsystem A, B, and C, respectively.

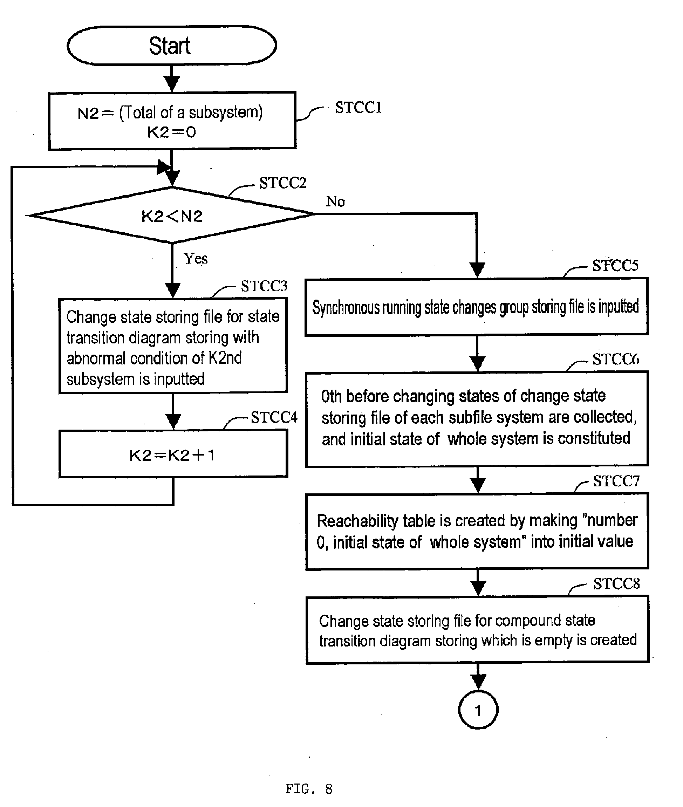

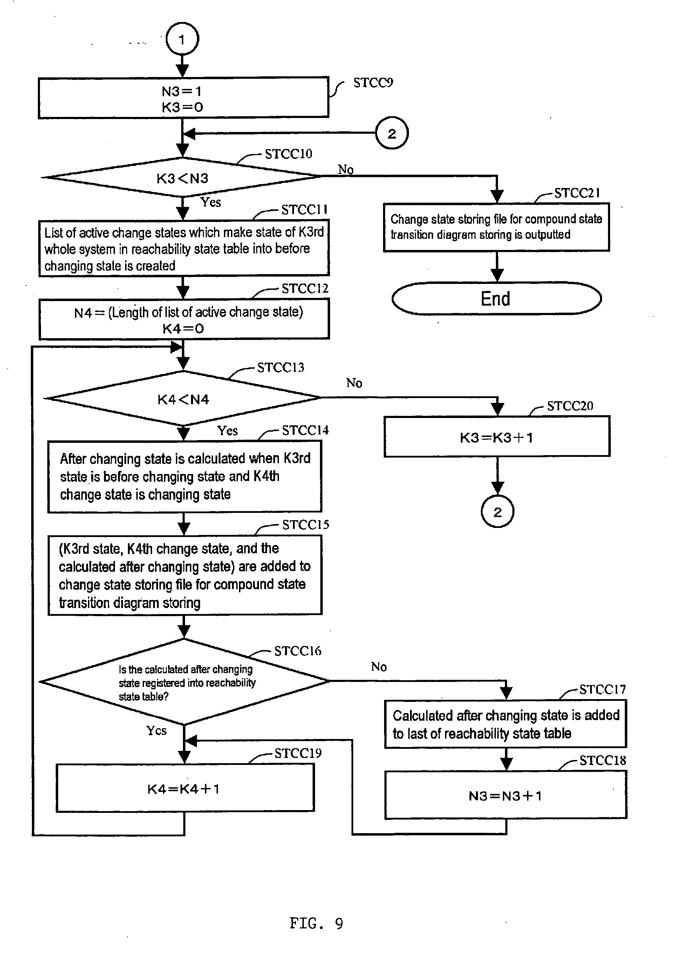

Figure 8 and Figure 9 are flow charts showing operation of compound state transition diagram generation part 17 of Figure 2.

Compound state transition diagram generation part 17 makes N2 the total of a subsystem, and sets K2 to 0 (step STCC1 of Fig. 8).

Then, compound state transition diagram generation part 17 judges by comparing the value of K2 and N2 (step STCC2 of Fig. 8).
If the value of K2 is smaller than the value of N2, step STCC3 of Fig. 8 will be processed, and if not small, step STCC5 of Fig. 8 will be processed.

In step STCC3 of Figure 8, compound state transition diagram generation part 17 inputs the change state storing file for state transition with an abnormal condition diagram storing of the subsystem of the 35K2nd change state storing files for state transition with an abnormal condition diagram storing.
Then, the value of K2 is increased one time (step STCC4 of Fig. 8), and it returns to judgment processing of step STCC2 of Fig. 8.

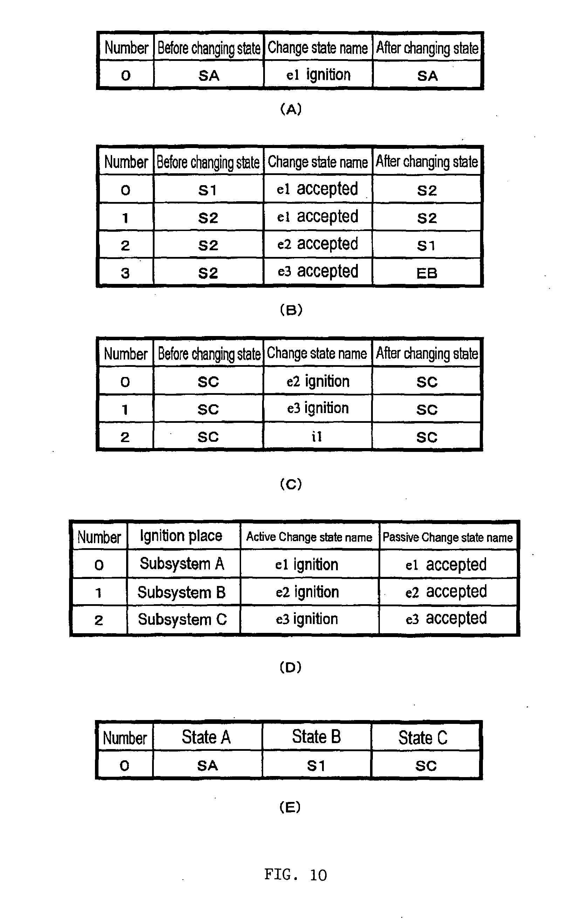

Compound state transition diagram generation part 17 inputs the change state storing file for state transition with an abnormal condition diagram storing of all the subsystems by processing of step STCC 1-4 of Figure 8.
In the case of subsystem A, B, and C, the change state storing files for state transition with an abnormal condition diagram storing are (A) of Figure 10, (B), and (C), respectively.
Here, the state before changes of the group of number 0 of each file is an initial state.

Then, compound state transition diagram generation part 17 inputs a synchronous running state changes group storing file from the system cooperation method storing file 31 (step STCC5 of Figure 8).
Here, a synchronizing state execution changes group storing file is a part of system cooperation method, and specifies the change state group (the only active change state and one or more passive change states) which changes simultaneously.
An example of this synchronous state execution changes group storing file is shown in (D) of Fig. 10.
The synchronous state execution changes group storing file can pinpoint the ignition place which is a place where an event ignites.
A synchronous state execution changes group storing file specifies the positive change state name which shows the igniting event.
A synchronous state execution changes group storing file specifies the group of the passive change state name which shows that the event which ignited is received.
Above-mentioned each class can be specified by a number.

Then, compound state transition diagram generation part 17 collects the states before changes of number 0 of the change state storing file of each subsystem (namely, initial state of each subsystem), and constitutes a system-wide initial state (step STCC6 of Fig. 8).
For example, in the case of the system which consists of subsystem A, B, and C, a system-wide initial state becomes with (SA, S1, SC).

Then, when compound state transition diagram generation part 17 constitutes a system-wide initial state, it will create the state table which can be reached by making "the initial state of number 0 and the whole system" into an initial value (step STCC7 of Figure 8). (E) of Fig. 10 is a figure showing an example of the state table which is created, and which can be reached.

Then, compound state transition diagram generation part 17 creates the change state storing file for compound state transition diagram storing whose contents are empty (step STCC8 of Fig. 8).

Compound state transition diagram generation part 17 sets the value of N3 to 1, and sets the value of K3 to 0 (step STCC9 of Fig. 9). Here, the value of N3 is the number of sequences of the state table which can be reached.

Then, compound state transition diagram generation part 17 judges by comparing the value of K3 and N3 (step STCC10 of Fig. 9).
If the value of K3 is smaller than the value of N3, step STCC11 of Figure 9 will be processed, if not small, change state storing file 37 for compound state transition diagram storing will be outputted (step STCC21 of Figure 9), and processing of Fig. 8 and Fig. 9 is ended.

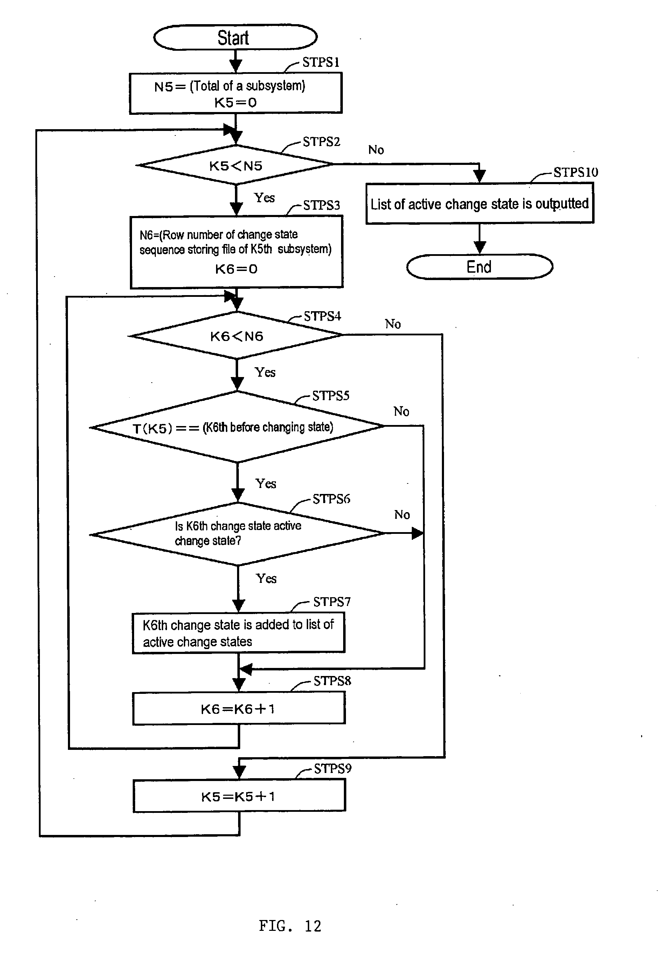

In step STCC11 of Fig. 9, compound state transition diagram generation part 17 creates the list of active change states which change into the state before changes the state of the K3rd whole system in the state table which can be reached.
The details of processing of Step STCC11 of Fig. 9 are later shown by Fig. 12.
In (E) of Fig. 10, the lists of active change states of the state of the 0th whole system are (e1 ignition, e2 ignition, e3 ignition, and i1).

Then, compound state transition diagram generation part 17 makes N4 the length of the list of active change states, and sets K4 to 0 (step STCC12 of Fig. 9).

Then, compound state transition diagram generation part 17 judges by comparing the value of K4 and N4 (step STCC13 of Fig. 9). If the value of K4 is smaller than the value of N4, step STCC14 of Fig. 9 will be processed, and if not small, the value of K3 will be increased "one" and it will return to judgment processing of step STCC10 of Fig. (step STCC20 of Fig. 9).

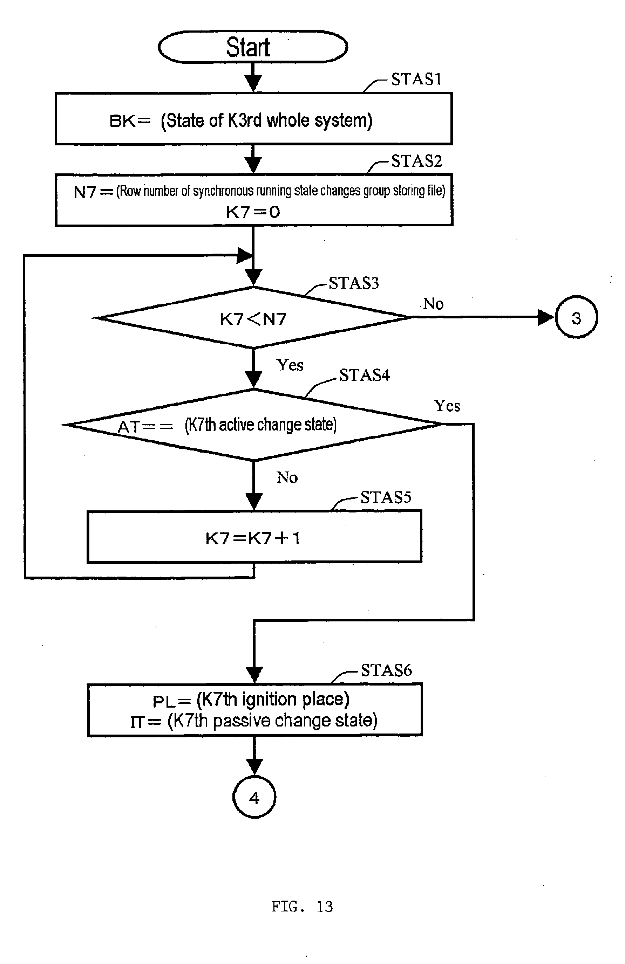

In step STCC14 of Figure 9, compound state transition diagram generation part 17 calculates the after changing state when making a before changing state and the K4th change state name of the list of active change states into a change state for the K3rd state in the table which can be reached (shown by Figs. 13 - 16 for details).

Then, compound state transition diagram generation part 17 changes a K3rd state into the state before changes, a K4th change state name is made into a change state name, and the group which changes the state after the changes which calculated into an after-changes state is added to change state storing file 37 for compound state transition diagram storing (step STCC15 of Fig. 9).

Then, compound state transition diagram generation part 17 judges whether the calculated after-changes state is registered into the state table which can be reached (step STCC16 of Fig. 9).
When registered, step STCC19 of Fig. 9 is processed.
When not registered, step STCC17 of Fig. 9 is processed.

In step STCC17 of Fig. 9, compound state transition diagram generation part 17 adds the calculated after-changes state to the last of the state table which can be reached.
Then, the value of N3 is increased "one" and step STCC19 of figure (step STCC18 of Fig. 9) 9 is processed.

In step STCC19 of Fig. 9, compound state transition diagram generation part 17 increases the value of K4 one.
And it returns to judgment processing of step STCC13 of Fig. 9.

By performing processing of Fig. 8 and Fig. 9 as indicated above, the compound state transition diagram of the whole system is generated.

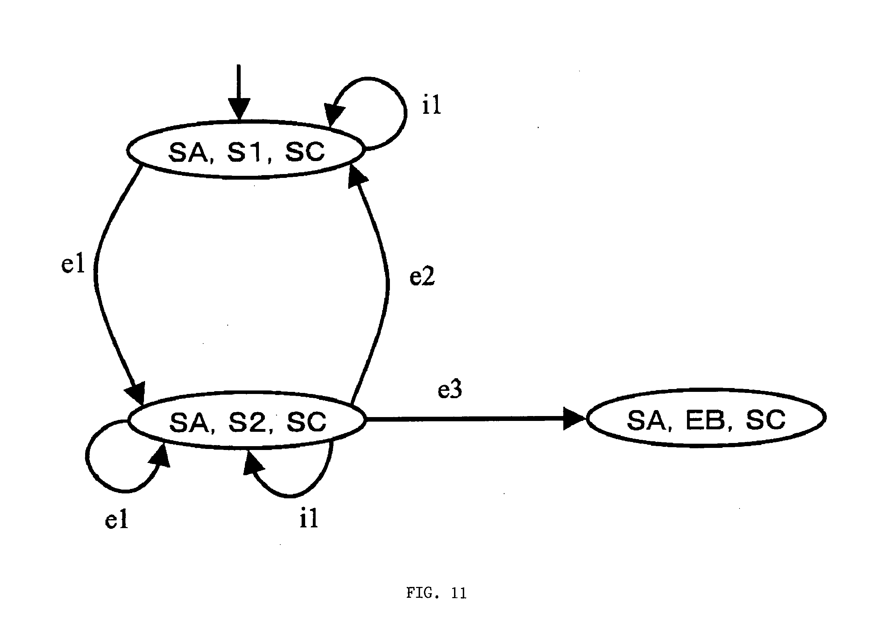

Fig. 11 is a figure showing the example of the compound state transition diagram generated.

Fig. 12 is a figure showing the details of processing (processing which creates the list of active change states which change into the state before changes the state of the K3 position whole system in the state table which can be reached) of Step STCC11 of Fig. 9.
Here, a state (T0, ..., T (K5), ..., T (N5-1)) presupposes that it is in the state of the K3rd whole system in the state table which can be reached.

First, compound state transition diagram generation part 17 makes N5 the total of a subsystem, and sets K5 to zero (step STPS1 of Fig. 12).

Then, compound state transition diagram generation part 17 compares and judges the value of K5 and N5 (step STPS2 of Fig. 12). If the value of K5 is smaller than the value of N5, step STPS3 of Fig. 12 will be processed, if not small, an active change state list will be outputted and processing of figure (step STPS10 of Fig. 12) 12 will be ended.

In step STPS3 of Fig. 12, compound state transition diagram generation part 17 makes N6 the number of sequences of the change state storing file of a K5th subsystem, and sets K6 to 0.

Then, compound state transition diagram generation part 17 compares and judges the value of K6 and N6 (step STPS4 of Fig. 12).
If the value of K6 is smaller than the value of N6, step STPS5 of Fig. 12 will be processed, and if not small, the value of K5 will be increased one and it will return to judgment processing of step STPS2 of figure (step STPS9 of Fig. 12) 12.

In step STPS5 of Figure 12, compound state transition diagram generation part 17 makes that judgment whose T (K5) is the K6th before changing state.
If T (K5) is theK6th before changing state, step STPS6 of Figure 12 will be processed, otherwise, step STPS8 of Figure 12 will be processed.

In step STPS6 of Figure 12, as for compound state transition diagram generation part 17, a K6th change state judges an active change state. If it is an active change state, a K6th change state will be added to the list of active change states (step STPS7 of Fig. 12), and step STPS8 of Fig. 12 will be processed.
If it is not an active change state, step STPS8 of Fig. 12 will be processed.

In step STPS8 of Fig. 12, compound state transition diagram generation part 17 increases the value of K6 one.
And it returns to judgment processing of step STPS4 of Fig. 12.

As mentioned above, compound state transition diagram generation part 17 can process step STCC11 of Fig. 9 by processing as Fig. 12.

Figs. 13 - 16 are figures showing the details of processing (processing which calculates the after transition state when making a before changing state and a K4th change state into a change state for a K3rd state) of Step STCC14 of Fig. 9.
The state of the K2nd whole system is set to (T0, ..., T (K8), ..., T (N8-1)), and AT presupposes that it is a K4yh change state, in following explanation.

First, compound state transition diagram generation part 17 changes BK into the state of the K3rd whole system in the state table which can be reached (step STAS1 of Fig. 13).
Then, compound state transition diagram generation part 17 makes N7 the number of sequences of a synchronous running state changes group storing file, and sets K7 to 0 (step STAS2 of Fig. 13).

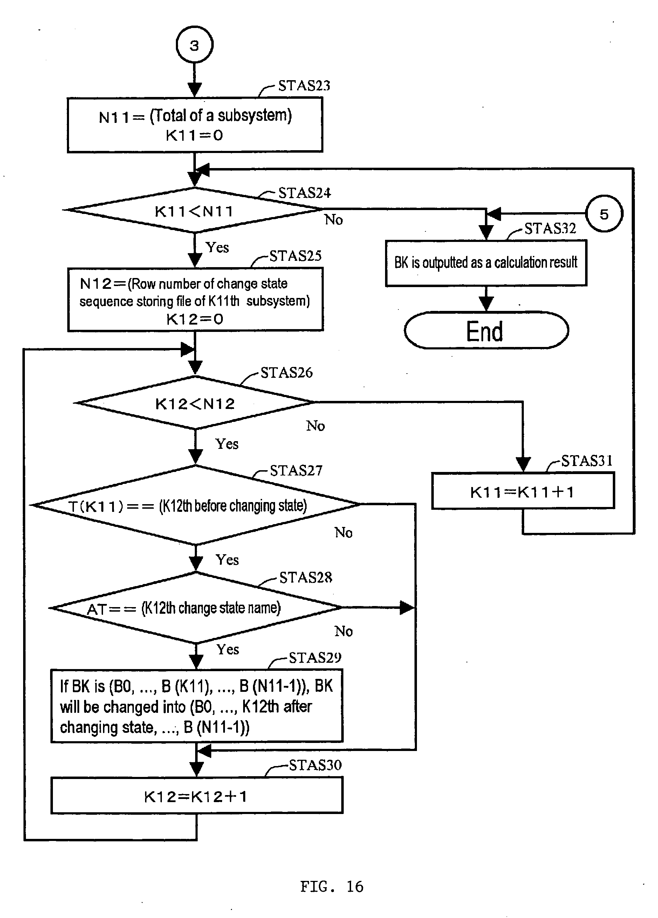

Then, compound state transition diagram generation part 17 judges by comparing the value of K7 and N7 (step STAS3 of Fig. 13).
When the value of K7 is smaller than the value of N7, step STAS4 of Fig. 13 is processed, and when not small, step STAS23 of Fig. 16 is processed (namely, when AT is internal processing).

In step STAS4 of Fig. 13, compound state transition diagram generation part 17 makes that judgment whose AT is a K7th active change state.
If AT is a K7th positive change state, step STAS6 of Fig. 13 will be processed, if AT is not a K7 position positive change state, K7 will be increased "one" (step STAS5 of Fig. 13), and it returns to judgment processing of step STAS3 of Fig. 13.

In step STAS6 of Fig. 13, compound state transition diagram generation part 17 makes PL a K7th ignition place, and makes IT a K7th passive change state.

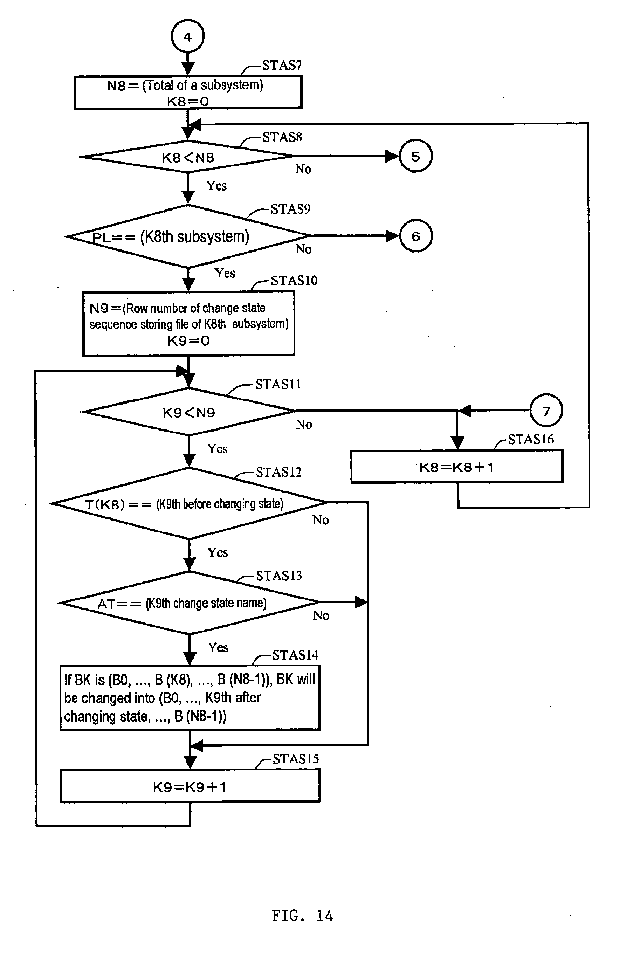

Then, compound state transition diagram generation part 17 makes N8 the total of a subsystem, and sets K8 to 0 (step STAS7 of Fig. 14).

Then, compound state transition diagram generation part 17 judges by comparing the value of K8 and N8 (step STAS8 of Fig. 14).
If the value of K8 is smaller than the value of N8, step STAS9 of Fig. 14 will be processed, and if not small, step STAS32 of Fig. 16 will be processed.

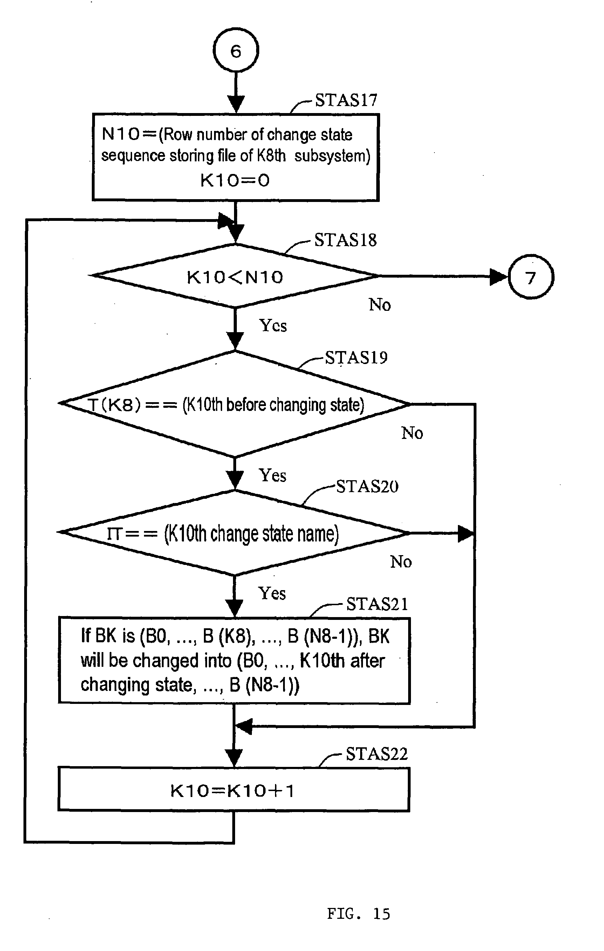

In step STAS9 of Fig. 14, compound state transition diagram generation part 17 makes that judgment whose PL is a K8th subsystem.
If PL is a K8th subsystem, step STAS10 of Fig. 14 will be processed, and if that is not right, step STAS17 of Fig. 15 will be processed.

In step STAS10 of Fig. 14, compound state transition diagram generation part 17 makes N9 the number of sequences of the change state storing file of a K8th subsystem, and sets K9 to 0.

Then, compound state transition diagram generation part 17 compares and judges the value of K9 and N9 (step STAS11 of Fig. 14).
If the value of K9 is smaller than the value of N9, step STAS12 of Fig. 14 will be processed, and if not small, step STAS16 of Fig. 14 will be processed.

In step STAS12 of Figure 14, compound state transition diagram generation part 17 makes that judgment whose T (K8) is K9th before changing state.
If T (K8) is K9th before changing state, step STAS13 of Figure 14 will be processed, and if that is not right, step STAS15 of Figure 14 will be processed.

In step STAS13 of Figure 14, compound state transition diagram generation part 17 makes that judgment whose AT is K9th change state name. If AT is a K9th change state name and if BK is set to (B0, ..., B (K8), ..., B (N8-1)), BK will be changed into (B0, ...., a K9th after-changes state, ..., B (N8-1)), and step STAS15 of figure (step STAS14 of Fig. 14) 14 will be processed.
If AT is not a K9th change state, step STAS15 of Figure 14 will be processed.

In step STAS15 of Fig. 14, compound state transition diagram generation part 17 increases the value of K9 one.
And it returns to judgment processing of step STAS11 of Fig. 14.

In step STAS16 of Fig. 14, compound state transition diagram generation part 17 increases the value of K8 one.
And it returns to judgment processing of step STAS8 of Fig. 14.

In step STAS17 of Fig. 15, compound state transition diagram generation part 17 makes N10 the number of sequences of the change state storing file of a K8 position subsystem, and sets K10 to 0.

Then, compound state transition diagram generation part 17 judges by comparing the value of K10 and N10 (step STAS18 of Fig. 15).
If the value of K10 is smaller than the value of N10, step STAS19 of Fig. 15 will be processed, and if not small, step STAS16 of Fig. 14 will be processed.

In step STAS19 of Figure 15, compound state transition diagram generation part 17 makes that judgment whose T (K8) is theK10th before changing state.
If T (K8) is the K10th before changing state, step STAS20 of Figure 15 will be processed, and if that is not right, step STAS22 of Figure 15 will be processed.

In step STAS20 of Figure 15, compound state transition diagram generation part 17 makes that judgment whose IT is a K10 position change state.
BK will be set to (B0, ..., B (K8), ..., B (N8-1)) if IT is a K10th change state.
Then, BK is changed into (B0, ..., a K10th after-changes state, ..., B (N8-1)), and step STAS22 of figure (step STAS21 of Fig. 15) 15 is processed.
If IT is not a K10th change state, step STAS22 of Fig. 15 will be processed.

In step STAS22 of Fig. 15, compound state transition diagram generation part 17 increases the value of K10 "one".
And it returns to judgment processing of step STAS18 of Fig. 15.
Processing of step STAS 10-15 of Figure 14 is processing which finds active changes AT, and processing of step STAS 17-22 of Figure 15 is processing which finds passive changes IT.

In step STAS23 of Fig. 16, compound state transition diagram generation part 17 makes N11 the total of a subsystem, and sets K11 to 0.

Then, compound state transition diagram generation part 17 judges by comparing the value of K11 and N11 (step STAS24 of Fig. 16).
When the value of K11 is smaller than the value of N11, step STAS25 of Fig. 16 is processed, and when not small, step STAS32 of Fig. 16 is processed.

In step STAS25 of Fig. 16, compound state transition diagram generation part 17 makes N12 the number of sequences of the change state storing file of a K11 position subsystem, and sets K12 to 0.

Then, compound state transition diagram generation part 17 judges by comparing the value of K12 and N12 (step STAS26 of Fig. 16).
If the value of K12 is smaller than the value of N12, step STAS27 of Fig. 16 will be processed, and if not small, step STAS31 of Fig. 16 will be processed.

In step STAS27 of Figure 16, compound state transition diagram generation part 17 makes that judgment whose T (K11) is the K12th before changing state.
If T (K11) is the K12th before changing state, step STAS28 of Figure 16 will be processed, and if T (K11) is not K12th before changing state, step STAS30 of Figure 16 will be processed.

In step STAS28 of Figure 16, compound state transition diagram generation part 17 makes that judgment whose AT is a K12th change state name.
BK will be set to (B0, ..., B (K11), ..., B (N11-1)) if AT is a K12th change state name.
BK is changed into (B0, ..., a K12th after changing state, ..., B (N11-1)) (step STAS29 of Figure 16), and step STAS30 of Figure 16 is processed.
If AT is not a K12th change state, step STAS30 of Figure 16 will be processed.

In step STAS30 of Fig. 16, compound state transition diagram generation part 17 increases the value of K12 "one", and returns to processing of step STAS26 of Fig. 16.

In step STAS31 of Fig. 16, compound state transition diagram generation part 17 increases the value of K11 "one", and returns to judgment processing of step STAS24 of Fig. 16.

In step STAS32 of Fig. 16, compound state transition diagram generation part 17 outputs BK as a calculation result.
And processing of Figs. 13 - 16 is ended.

As mentioned above, compound state transition diagram generation part 17 can process step STCC14 of Fig. 9 by processing Figs. 13 - 16.

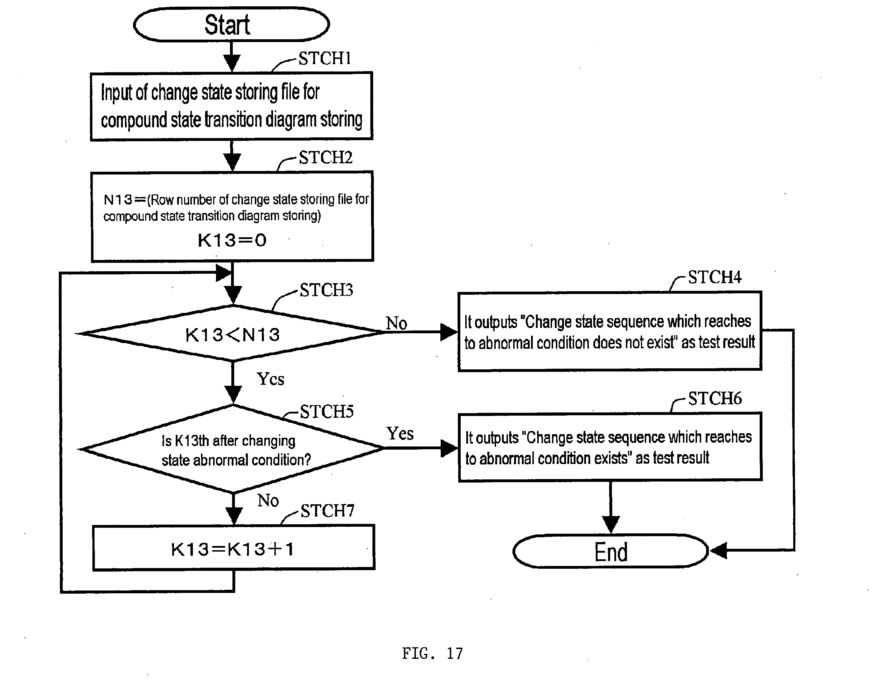

Figure 17 is a flow chart showing operation of abnormal condition reachability inspection section 23 of Figure 2.

First, abnormal condition reachability inspection section 23 inputs change state storing file 37 for compound state transition diagram storing (step STCH1 of Figure 17).

Then, abnormal condition reachability inspection section 23 makes N13 the number of sequences of change state storing file 37 for compound state transition diagram storing, and sets K13 to 0 (step STCH2 of Figure 17).

And abnormal condition reachability inspection section 23 judges by comparing the value of K13 and N13 (step STCH3 of Figure 17).
If the value of K13 is smaller than the value of N13, step STCH5 of Figure 17 will be processed, and if not small, the processing which outputs "the change state sequence which reaches to an abnormal condition does not exist" as an inspection result, and is shown in Figure (step STCH4 of Figure 17) 17 will be ended.

In step STCH5 of Fig. 17, abnormal condition reachability inspection section 23 judges that the after-changes state of K13th is abnormal condition or not.
If a K13th after-changes state is an abnormal condition, the abnormal condition reachability inspection section 23 outputs "exist a change state sequence which reaches to an abnormal condition as an inspection result will output existence", and will end processing of fig. 17 (step STCH6 of Fig. 17). If the K13th after-changes state is not an abnormal condition, the value of K13 will be increased "one" and it will return to judgment processing of step STCH3 of fig.17 (step STCH7 of Fig. 17).

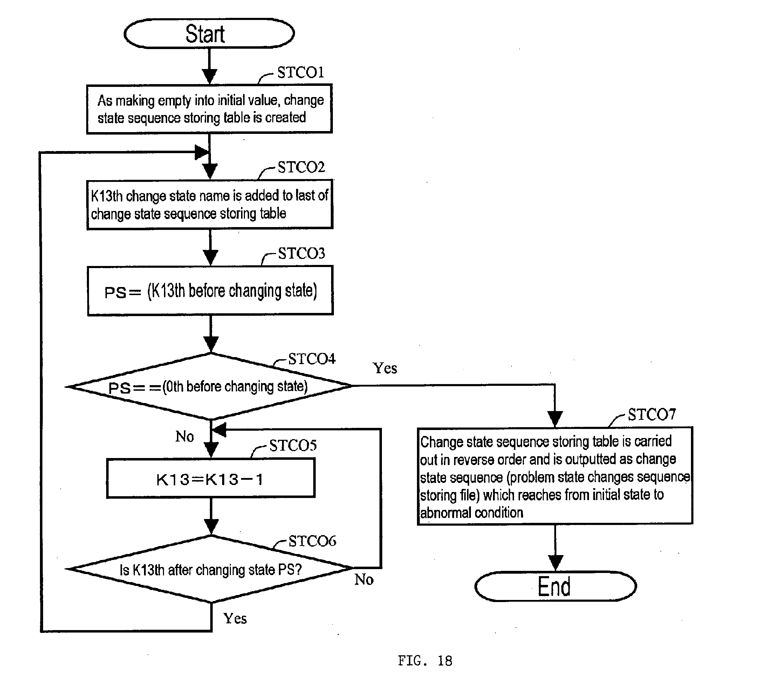

The change state sequence which reaches from an initial state to an abnormal condition as follows can be outputted by changing processing of step STCH6 of Fig. 17, as shown in the flow chart of Fig. 18.

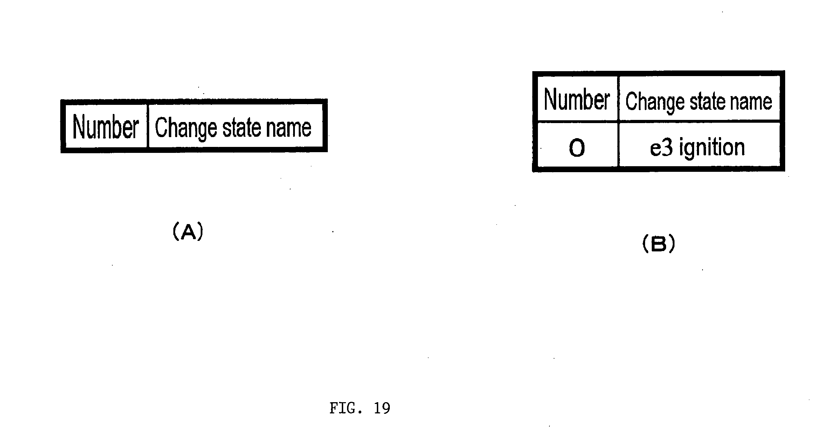

In processing of Figure 18, abnormal condition reachability inspection section 23 creates a change state sequence storing table by making empty into an initial value first (step STCO1 of Figure 18).
Here, "empty" means nothing is added.
The change state sequence storing table created by this processing is as it is shown in (A) of Figure 19, that makes a change state name what can be specified by a number.

Then, abnormal condition reachability inspection section 23 adds a K13th change state to the last of a change state sequence storing table (step STCO2 of Figure 18).
When adding the change state name of "e3 ignition", as it is in (B) of Fig. 19, the group which sets a number to 0 and is considered as e3 ignition as a change state name is added.

Then, abnormal condition reachability inspection section 23 makes PS a K13th before changing state (step STCO3 of Figure 18).

And abnormal condition reachability inspection section 23 makes that judgment whose PS is the 0th before changing state (namely, initial state) (step STCO4 of Figure 18).
If PS is an initial state, a change state sequence storing table will be made into the order of reverse, the change state sequence which reaches from an initial state to an abnormal condition will be outputted to change state sequence storing file 39 for problem state changes sequence storing (step STCO7 of Figure 18), and processing that is shown Figure 18 will be ended.
If PS is not an initial state, step STCO5 of Fig. 18 will be processed.

In step STCO5 of Fig. 18, abnormal condition reachability inspection section 23 decreases the value of K13 "one".

Then, a K13th after changing state makes that judgment which is PS (step STCO6 of Figure 18).
If PS is a K13th after changing state, it will return to processing of step STCO2 of Figure 18, and if that is not right, it will return to processing of step STCO5 of Figure 18.

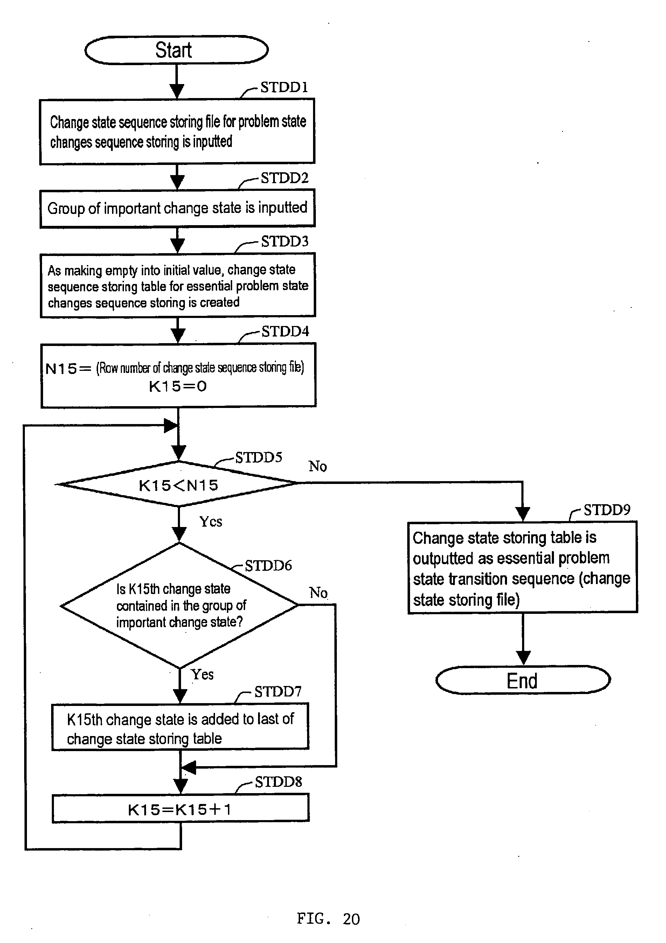

Figure 20 is a flow chart showing an example of operation of trivial changes distinction part 27 of Figure 2.
An example of trivial changes distinction part 27 is an out put a change state sequence obtained by removing the change state which is not contained in a change state group with a user's interest from a problem state changes sequence, based on a change state group with a user's interest stored in change state storing file 33 for important change state storing of a change state sequence (problem state changes sequence) and Fig. 2 which reaches to an abnormal condition from the initial state searched for when abnormal condition reachability inspection section 23 processes Fig. 18.

In processing of Fig. 20, trivial changes distinction part 27 inputs change state sequence storing file 39 for problem state changes sequence storing first (step STDD1 of Fig. 20).

Then, trivial changes distinction part 27 inputs change state storing file 33 for important change state storing (step STDD2 of Fig. 20).
The data stored in this change state storing file 33 for important change state storing is a group (change state group of the user's interest) of an important change state.

Then, trivial changes distinction part 27 makes empty as an initial value, and the change state sequence storing table which stores an essential problem state changes sequence is created (step STDD3 of Fig. 20).
Here, "empty" means that nothing is added.

Then, trivial changes distinction part 27 makes N15 the number of sequences of a change state sequence storing file, and sets K15 to 0 (step STDD4 of Fig. 20).

Trivial changes distinction part 27 judges by comparing the value of K15 and N15 (step STDD5 of Fig. 20).
If the value of K15 is smaller than the value of N15, step STDD6 of Fig. 20 will be processed.
If not small, it is an essential problem state changes sequence about a change state storing table.
It carries out, outputs to change state sequence storing file 41 for essential problem state changes sequence storing (step STDD9 of Figure 20), and processing of Figure 20 is ended.

In step STDD6 of Figure 20, trivial changes distinction part 27 judges whether a K15th change state is contained in the group of an important change state.
If a K15th change state is contained in the group of an important change state, a K15th change state will be added to the last of a change state storing table, and step STDD8 of Figure (step STDD7 of Figure 20) 20 will be processed.
If not contained, step STDD8 of Figure 20 will be processed.

In step STDD8 of Fig. 20, trivial changes distinction part 27 increases the value of K15 "one", and returns to judgment processing of step STDD5 of Fig. 20.

Indication area 21 of Figure 2 displays the output of state transition with an abnormal condition diagram inspection section 15 of Figure 2. About a problem state changes sequence, the change state sequence (change state sequence obtained by trivial changes distinction part 27) stored in change state sequence storing file 41 for essential problem state changes sequence storing may be displayed.
Indication area 21 may perform display control to a display.

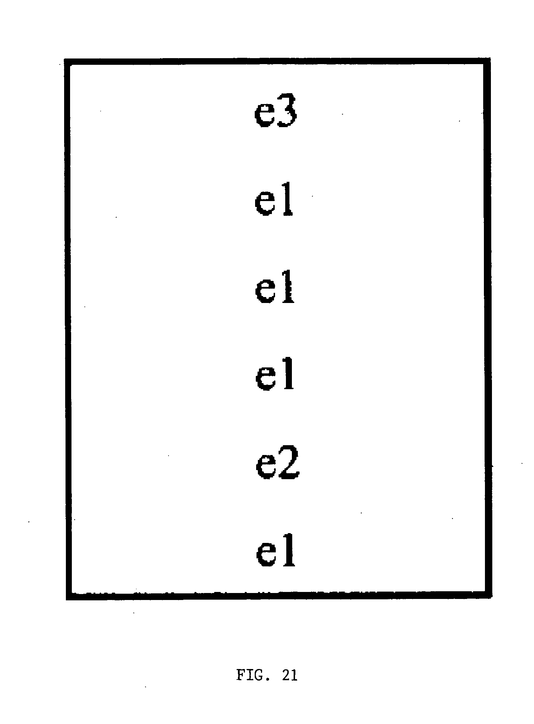

As an example of indication area 21, a problem state changes sequence is displayed in an order from the thing near the change state to an abnormal condition.
For example, the example of an indication when problem state changes sequences are e1, e2, e1, e1, e1, and e3 becomes as it is shown in Fig. 21.
As for a user looking for a problem, in order to start from near the abnormal condition in many cases, a problem becomes is easy to discover by displaying in this way.

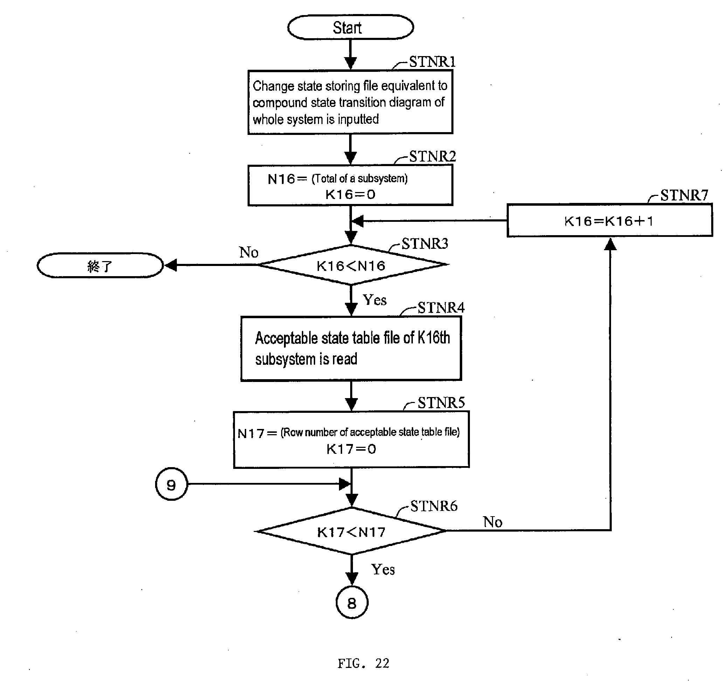

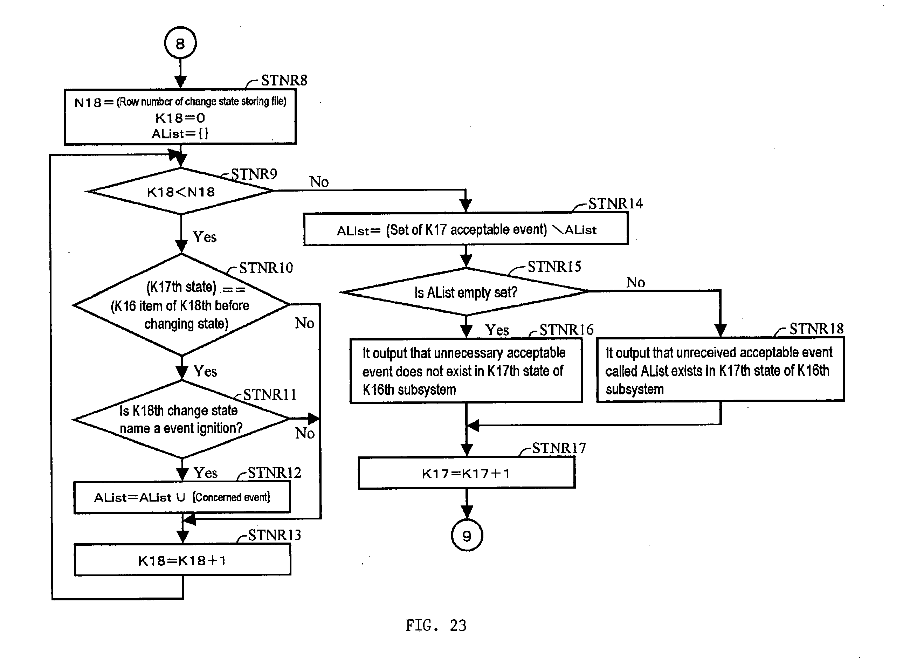

Figure 22 and Figure 23 are flow charts showing operation of acceptable event refusal-of-receipt inspection section 25.

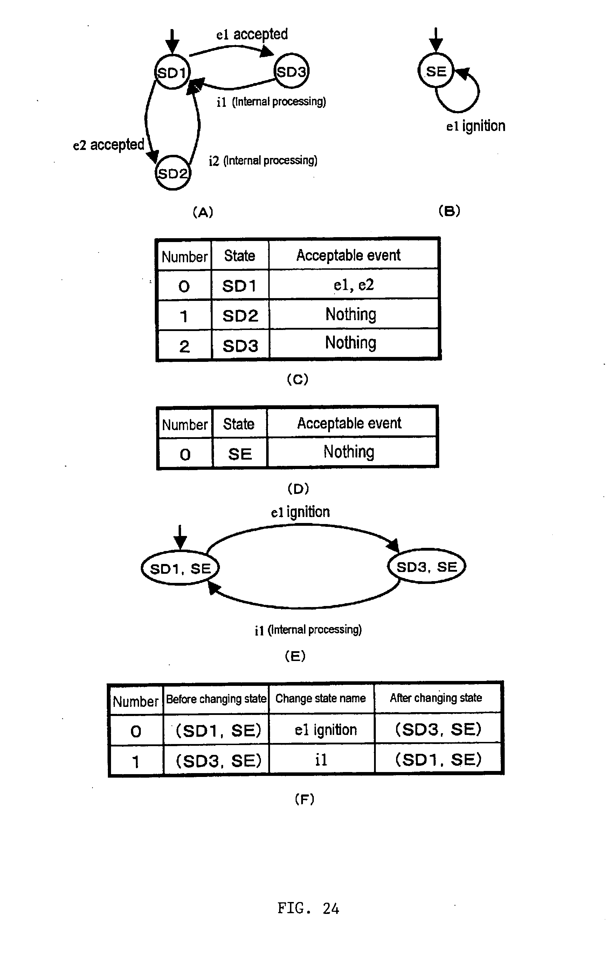

One of the examples is explained using the example operation of each step of Figure 22 and Figure 23 is indicated to be to Figure 24.
Here, (A) of Figure 24 and (B) are the state transition diagrams of subsystems D and E which constitute a system to be examined, respectively.
Subsystem D makes state SD1 an initial state, as shown in (A) of Figure 24.
Subsystem D changes to state SD3, when event e1 is received in state SD1.
Subsystem D changes to state SD1 by internal processing i1 in state SD3.
Subsystem D presupposes that it changes to state SD2 when event e2 is received in state SD1, and it changes to state SD1 by internal processing i2 in state SD2.
Subsystem E makes state SE an initial state.
Subsystem E ignites event e1 and changes to state SE. (Since a before changing state is state SE, it is still state SE)

(C) of Figure 24 is an acceptable state table file of subsystem D.
Subsystem D shall receive event groups {e1, e2} in state SD1, and there shall be no acceptable event in the state SD2 and SD3.
(D) of Figure 24 is an acceptable state table file of subsystem E.
An acceptable event shall not have subsystem E.

(E) of Figure 24 is a Figure (compound state transition diagram) showing the change state of the whole system which compounded subsystem D and subsystem E.
The compound system makes a state (SD1, SE) an initial state.
In a state (SD1, SE), a change state is changed into a state (SD3, SE) by e1 ignition of subsystem E (e1 acceptance of subsystem D).
In a state (SD3, SE), a change state shall be changed into a state (SD1, SE) by internal processing i1 of subsystem D.
(F) of Figure 24 is an example of the change state storing file equivalent to the compound state transition diagram shown in (E) of Figure 24.

First, acceptable event refusal-of-receipt inspection section 25 inputs change state storing file 37 (change state storing file equivalent to the compound state transition diagram of the whole system) for compound state transition diagram storing (step STNR1 of Fig. 22).
(F) of Fig. 24 is inputted in the example of Fig. 24.

Then, acceptable event refusal-of-receipt inspection section 25 makes N16 the total of a subsystem, and sets K16 to 0 (step STNR2 of Figure 22).
In the example of Fig. 24, a subsystem is two, D and E, and sets N16 to 2.

Then, acceptable event refusal-of-receipt inspection section 25 judges by comparing the value of K16 and N16 (step STNR3 of Figure 22).
If the value of K16 is smaller than the value of N16, step STNR4 of Figure 22 will be processed, and if not small, processing of Figure 22 will be ended.

In step STNR4 of Figure 22, acceptable event refusal-of-receipt inspection section 25 reads the acceptable state table file of a K16th subsystem (step STNR4 of Figure 22).
In the example of Figure 24, the acceptable state table file of subsystem D is shown in (C) of Figure 24, and the acceptable state table file of subsystem E is shown in (D) of Figure 24.

Then, acceptable event refusal-of-receipt inspection section 25 makes N17 the number of sequences of an acceptable state table file, and sets K17 to 0 (step STNR5 of Figure 22).
In the example of Fig. 24, in the case of subsystem D, N17 is 3, and, in the case of subsystem E, N17 is 1.

Acceptable event refusal-of-receipt inspection section 25 judges by comparing the value of K17 and N17 (step STNR6 of Figure 22).
If the value of K17 is smaller than the value of N17, step STNR8 of Fig. 23 will be processed, and if not small, the value of K16 will be increased "one" and it will return to judgment processing of step STNR3 of figure (step STNR7 of Fig. 22) 22.

In step STNR8 of Figure 23, acceptable event refusal-of-receipt inspection section 25 makes N18 the number of sequences of a change state storing file, sets K18 to 0, and makes Alist {} (step STNR8 of Figure 23).

Then, acceptable event refusal-of-receipt inspection section 25 judges by comparing the value of K18 and N18 (step STNR9 of Figure 23).
If the value of K18 is smaller than N18, step STNR10 of Figure 23 will be processed, and if not small, step STNR14 of Figure 23 will be processed.

In step STNR10 of Figure 23, acceptable event refusal-of-receipt inspection section 25 makes a judgment of K16 item of the K18th before changing state of the change state storing file by which the K17th state of the acceptable state table file of a K16th subsystem is equivalent to a compound state transition diagram.
If the K17th state of the acceptable state table file of a K16th subsystem is K16 item of the K18th before changing state of the change state storing file equivalent to a compound state transition diagram, step STNR11 of Figure 23 will be processed.
If that is not right, step STNR13 of Figure 23 will be processed.

In step STNR11 of Figure 23, acceptable event refusal-of-receipt inspection section 25 makes that judgment whose K18th change state name is event ignition.
if it is event ignition, what was produced by calculating the logical addition of AList and the event concerned will newly be set to AList (namely, adding the event concerned to AList) (step STNR12 of Fig. 23), and step STNR13 of Fig. 23 will be processed.
If it is not event ignition, step STNR13 of Figure 23 will be processed.

In step STNR13 of Fig. 23, acceptable event refusal-of-receipt inspection section 25 increases the value of K18 "one".
And it returns to judgment processing of step STNR9 of Figure 23.

In step STNR14 of Figure 23, acceptable event refusal-of-receipt inspection section 25 newly sets to AList the list which consists of the state except the state of belonging to AList from a set of a K17th acceptable event.
In the case of state SD1 of subsystem D, AList is set to {e2} (namely, when both K16 and K17 are 0).

Then, in acceptable event refusal-of-receipt inspection section 25, AList judges an empty set (step STNR15 of Figure 23).
If it is an empty set, if an acceptable refusal of receipt event does not exist in a K16th subsystem, it will be outputted to it.
And (step STNR16 of Figure 23) step STNR17 of Figure 23 is processed.
It will output, if it is not an empty set, and there is an acceptable refusal of receipt event called AList in the K17th state of a K16th subsystem.
And (step STNR18 of Figure 23) and step STNR17 of Figure 23 are processed.

In step STNR17 of Fig. 23, acceptable event refusal-of-receipt inspection section 25 increases the value of K17 "one".
And it returns to judgment processing of step STNR6 of Figure 22.

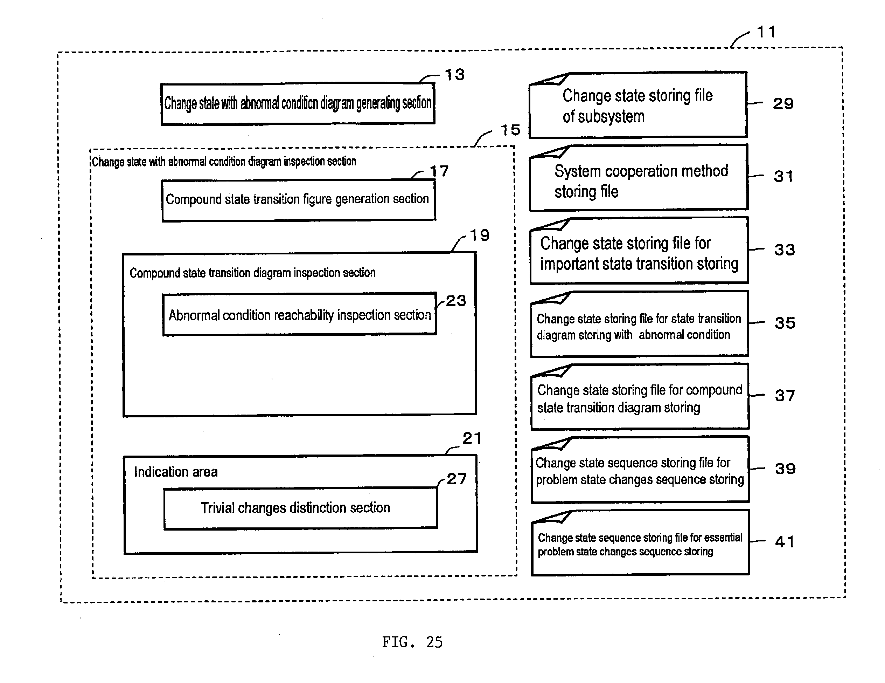

As shown, for example in Figure 25, it is good also as what has abnormal condition reachability inspection section 23 without including acceptable event refusal-of-receipt inspection section 25 for compound state transition diagram inspection section 19.

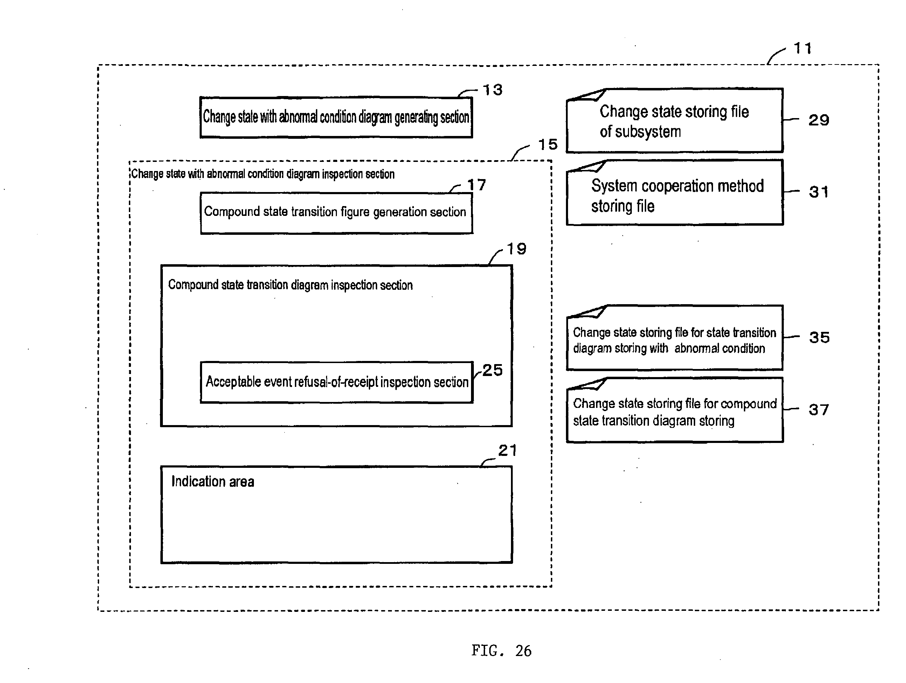

As shown, for example in Figure 26, it is good also as what has acceptable event refusal-of-receipt inspection section 25 without including abnormal condition reachability inspection section 23 for compound state transition diagram inspection section 19.

### [Embodiment 3]

The system for verification consists of subsystem A, B, and C in Figure 3.
The queue of length "1" is between subsystem B and subsystem C.
About the case where it is assumed by this queue that a model can be made as an event is held, operation of state transition diagram verification support device 11 of Figure 2 is explained.

Networks, such as LAN, are one of those can be modeled as a queue, for example.
What is necessary is just to make the length of a queue into suitable length, when the assumption length of a queue is "1" collapses.

This queue presupposes that it has operation (event input) of putting in an event, and the operation (event output) which takes out an event.
Since an event input is caused by event ignition, it is a passive change state, and since an event output causes event acceptance, it is an active change state.

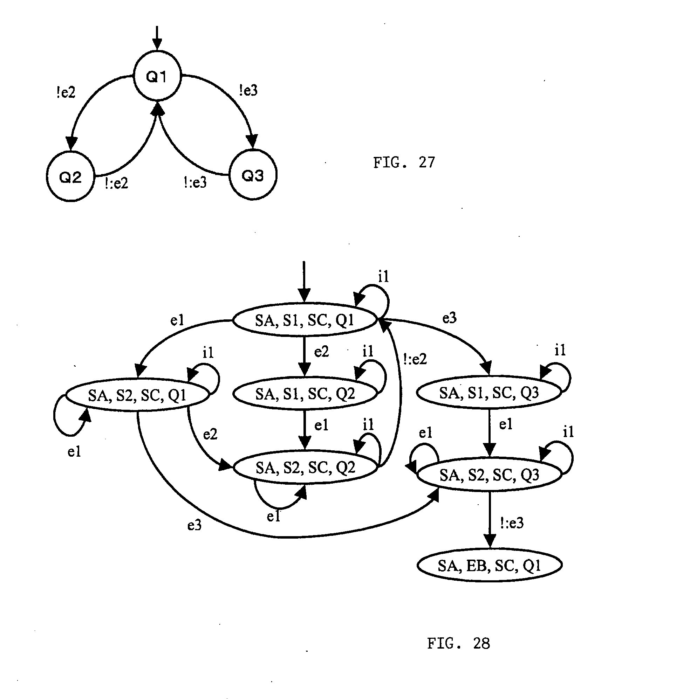

Fig. 27 is a figure showing the change state of the queue of length "1."
The state transition diagram of this queue is contained in the system cooperation method.
In Figure 27, symbol !e2, !e3 shall mean event e2 and the event input of e3, respectively, and symbol !:e2, :!e3 shall mean event e2 and the event output of e3, respectively.

At this time, the following four conditions can be considered as an example of the system cooperation method.
The 1st is that subsystems A and C do not have an acceptable state.
The 2nd, states S1 and S2 of subsystem B are in the acceptable state of an event {e1}, and state S2 is in the acceptable state of event groups {e2, e3}.
The 3rd is generating simultaneously event ignition (active change state) and event acceptance (passive change state) of e1.
The 4th is generating simultaneously event ignition (active change state) of e2 (e3), the event input (passive change state) of e2 (e3) and the event output (active change state) of e2 (e3), and event acceptance (passive change state) of e2 (e3).

When a system to be examined is the above, operation of state transition diagram verification support device 11 is as follows.

First, state transition with an abnormal condition diagram generation part 13 generates a state transition with an abnormal condition diagram to each state transition diagram of subsystem A, B, and C (refer to Figure 6).

Then, compound state transition diagram generation part 17 generates the compound state transition diagram of the whole system based on the state transition with an abnormal condition diagram of each subsystem and the state transition diagram (a part of system cooperation method) of the queue of length "1" which state transition with an abnormal condition diagram generation part 13 generated.

Since the initial states of subsystem A, B, and C and a queue are SA, S1, SC, and Q1, respectively, specifically, system-wide initial states are (SA, S1, SC, Q1).
The active change states from SA, S1, SC, and either of Q1 are event ignition of e1, e2, and e3, and the internal processing of i1, and passive change states are event acceptance of e1, and an event input of e2 and e3.
In the system cooperation method, the simultaneous generation of event ignition and event acceptance of e1 is carried out.
The simultaneous generation of event acceptance and the event input of e2 (e3) is carried out.
Therefore, the change states from (SA, S1, SC, Q1) are event ignition of event ignition of e1, e2, and e3, and the internal processing of i1.
Hereafter, the compound state transition diagram of the whole system is obtained in a similar manner.
The compound state transition diagram obtained is shown in Fig. 28.

Then, compound state transition diagram inspection section 19 inspects the compound state transition diagram generated by compound state transition diagram generation part 17.
And indication area 21 displays the output of compound state transition diagram inspection section 19.

### [Embodiment 4]

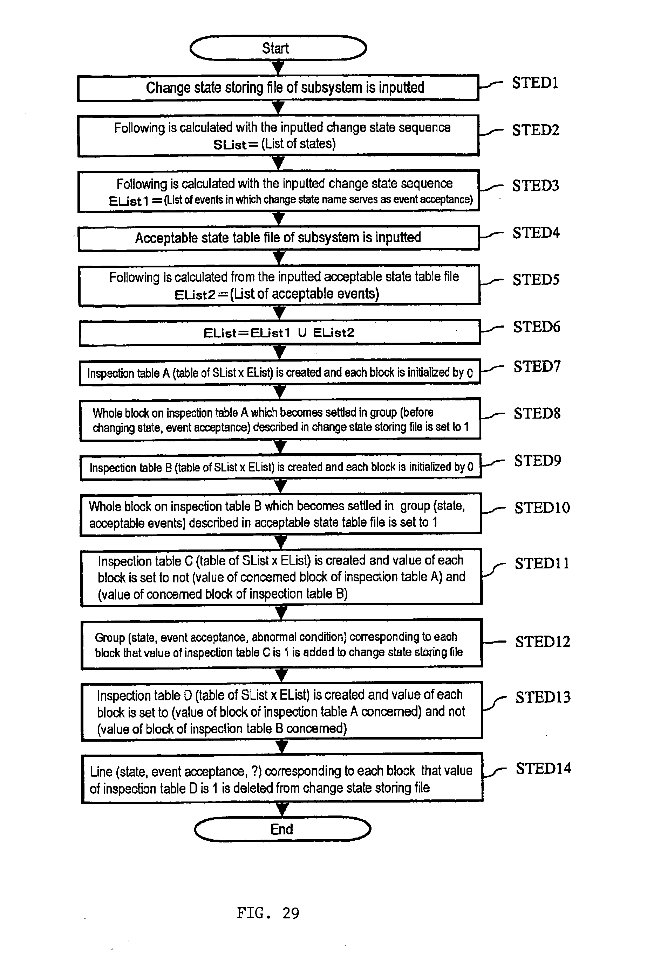

Figure 29 is a flow chart showing other examples of operation of state transition with an abnormal condition diagram generation part 13 of Figure 2.
In the flow chart of Figure 4, it is a group of the state of registering with the acceptable state table file, and an acceptable event, and the state concerned is made a change state storing file with a before changing state.
When what makes acceptance of the event concerned a change state name is not registered, the state concerned is made into a before changing state, and processing which adds the group which makes acceptance of the event concerned a change state name, and makes an abnormal condition an after changing state to a change state storing file is carried out.

In the flow chart of Fig. 29, in addition to the above-mentioned processing, before changing state and change state name which were registered into the change state storing file and a group of the after changing state, deletes what is not registered into an acceptable state table file which has a passive change state and the group of a before changing state and a change state name performs processing.
(That is, in a change state storing file, the change state of the event acceptance it is presupposed by the acceptable state table file that it is not an acceptable event of the state concerned is deleted)

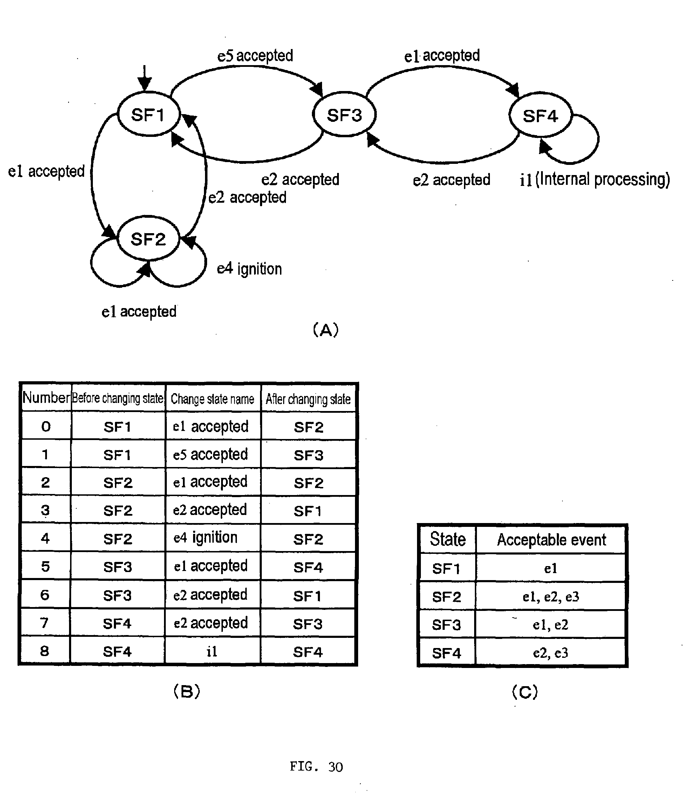

Figs. 30 - 32 are Figures showing the example of each processing of Figure 29.
(A) of Figure 30 is a Figure showing the change state of subsystem F which is one of the subsystems which constitute a system to be examined.
This subsystem F makes state SF1 an initial state.
Subsystem F changes to state SF2, when event e1 is received in state SF1.
Subsystem F changes to state SF3, when event e5 is received in state SF1.
Subsystem F changes to state SF2, when event e1 is received in state SF2.
(Since the state before changes is state SF2, it is still state SF2) Subsystem F changes to state SF1, when event e2 is received in state SF2.
Subsystem F ignites event e4 in state SF2, changes to state SF2, in state SF3, receives event e1, and changes to state SF4.
Subsystem F receives event e2 in state SF3, changes to state SF1, receives event e2 in state SF4, and changes to state SF3.
Subsystem F presupposes that it changes to state SF4 by internal processing i1 in state SF4.
The change state storing file of this subsystem F is shown in (B) of Fig. 30.

An acceptable state table file is shown in (C) of Fig. 30.
In (C) of Fig. 30, the acceptable event in state SF1 is an event {e1}.
The acceptable events in state SF2 are event groups {e1, e2, e3}, the acceptable events in state SF3 are event groups {e1, e2}, and the acceptable events in state SF4 are event groups {e2, e3}.

In Figure 29, state transition with an abnormal condition diagram generation part 13 inputs the change state storing file of a subsystem first (step STED1 of Figure 29).

Then, state transition with an abnormal condition diagram generation part 13 calculates the list of states from the inputted change state storing file, and is taken as SList (step STED2 of Figure 29).
In (B) of Fig. 30, it is SList= {SF1, SF2, SF3, SF4}.

Then, state transition with an abnormal condition diagram generation part 13 calculates the list of events in which a change state name serves as event acceptance from the inputted change state storing file, and is set to EList1 (step STED3 of Figure 29).
In (B) of Fig. 30, it is EList= {e1, e2, e5}.

Then, state transition with an abnormal condition diagram generation part 13 inputs the acceptable state table file of a subsystem (step STED4 of Figure 29).

Then, state transition with an abnormal condition diagram generation part 13 calculates the list of acceptable events from the inputted acceptable state table file, and is set to EList2 (step STED5 of Figure 29).
In (C) of Fig. 30, it is EList2= {e1, e2, e3}.

Then, state transition with an abnormal condition diagram generation part 13 sets the set union of EList1 and EList2 to EList (step STED6 of Figure 29). (that is, EList=EList1□¾EList2 is calculated)
In the case of Fig. 30, it is EList= {e1, e2, e3, e5}.

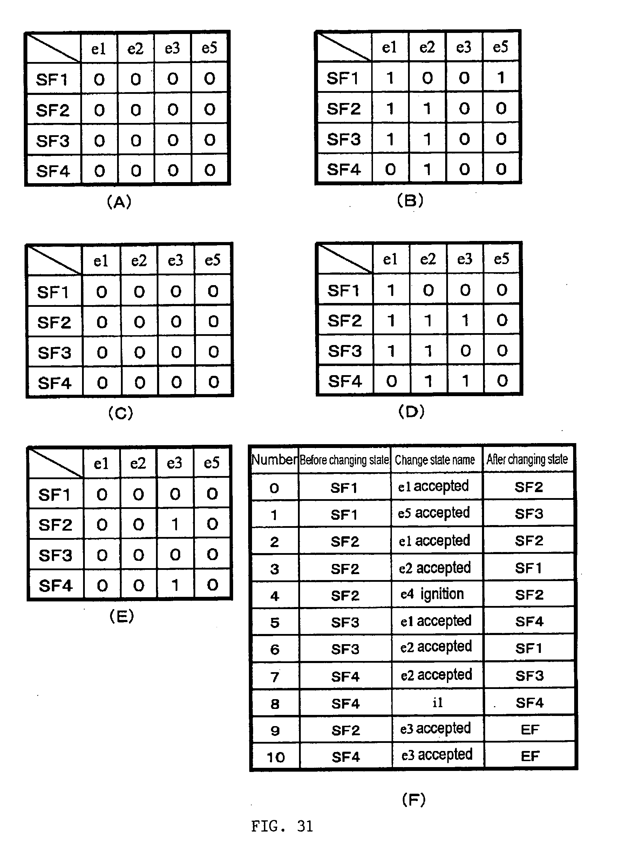

Then, each block creates inspection table A which becomes settled in the group of the element of SList, and the element of EList, and state transition with an abnormal condition diagram generation part 13 initializes each block by 0 (step STED7 of Figure 29).
At this time, inspection table A comes to be shown in (A) of Fig. 31.

Then, state transition with an abnormal condition diagram generation part 13 sets to "1" all the blocks on inspection table A which becomes settled in the group described by the change state storing file (a before changing state, event acceptance) (step STED8 of Figure 29).
Nothing is done when change state names are event ignition and internal processing.
When a change state storing file is (B) of Fig. 30, the groups of (a front [ changes ] state and event acceptance) are (SF1, e1), (SF1, e5), (SF2, e1), (SF2, e2), (SF3, e1), (SF3, e2), and (SF4, e2).
Therefore, the block on inspection table A corresponding to these groups is set to "1."
Inspection table A created here becomes as shown in (B) of Fig. 31.

Then, each block creates inspection table B which becomes settled in the group of the element of SList, and the element of EList, and state transition with an abnormal condition diagram generation part 13 initializes each block by 0 (step STED9 of Figure 29).
At this time, inspection table B comes to be shown in (C) of Fig. 31.

Then, state transition with an abnormal condition diagram generation part 13 sets to 1 all the blocks on inspection table B which becomes settled in the group described by the change state storing file (a state, an acceptable event) (step STED10 of Figure 29).
When a change state storing file is (C) of Fig. 30, the groups of (a state and an acceptable event) are (SF1, e1), (SF2, e1), (SF2, e2), (SF2, e3), (SF3, e1), (SF3, e2), (SF4, e2), and (SF4, e3).
Therefore, the block on inspection table B corresponding to these groups is set to "1."
Inspection table B created here becomes as shown in (D) of Fig. 31.

Then, state transition with an abnormal condition diagram generation part 13 creates inspection table C where each block becomes settled in the group of the element of SList, and the element of EList.
The value of each block turns into a value acquired by calculating AND of negation of the value of the block of inspection table A concerned, and the value of the block of inspection table B concerned (step STED11 of Fig. 29).
Inspection table C created here becomes as shown in (E) of Fig. 31.

In each block of this inspection table C, the group of the state corresponding to the block which is 1, and an event is a group of the state where it is described by the acceptable state table file, and an event, and is not described by the change state storing file as a group of a before changing state and event acceptance.
Although it changes the group of such a state and an event into the state which can receive an event, the change state is not specified in the change state storing file.

Then, state transition with an abnormal condition diagram generation part 13 adds the line corresponding to each block of 1 (a state, event acceptance, abnormal condition) in the value of inspection table C to a change state storing file (step STED12 of Figure 29).
By this operation, a change state storing file becomes like (F) of Fig. 31.
Although acceptance is made possible by processing of step STED12 of Figure 29, by it, a change state is added as changes to an abnormal condition about what the change state is not specified as in the change state storing file.

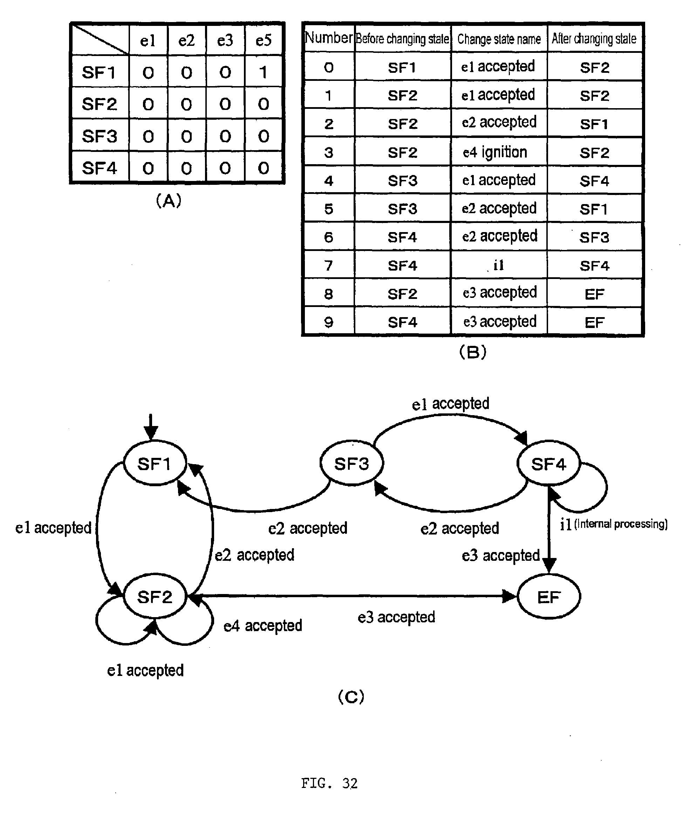

Then, state transition with an abnormal condition diagram generation part 13 creates inspection table D where each block becomes settled in the group of the element of SList, and the element of EList.
State transition with an abnormal condition diagram generation part 13 makes the value of each block the value acquired by calculating AND with negation of the value of the block of inspection table A concerned, and the value of the block of inspection table B concerned (step STED13 of Figure 29).
Inspection table D created here becomes as shown in (A) of Fig. 32.

In each block of this inspection table D, although the change state is registered into the change state storing file as for the group of the state corresponding to the block which is 1, and an event, and it is not a group of acceptance in a file of acceptable state table in an acceptance state table file.

Then, state transition with an abnormal condition diagram generation part 13 makes the each block state that correspond to the value of inspection table D is "1" to a before changing state, and deletes the line which makes acceptance of a corresponding event a change state name (step STED14 of Figure 29).
By this operation, a change state storing file becomes as shown in (B) of Fig. 32.

(B) of Figure 32 generated by the above operation is a state transition with an abnormal condition storing file outputted.
The state transition with an abnormal condition diagram of the subsystem generated is (C) of Figure 32.

### [Embodiment 5]

It may be made to inspect whether the change state sequence which reaches from an initial state to an abnormal condition as other examples of abnormal condition reachability inspection section 23 using the depth priority search algorithm in consideration of a loop exists. (If it comes to the state where it passed until now, search of depth priority will be stopped, and it moves to the following change state).

For example, the depth priority search algorithm which took the loop into consideration in an order of "e1>e2>e3>i1" is used to the compound state transition diagram of the whole system of Figure 11.

First, the state of a system changes from an initial state (SA, S1, SC) to (SA, S2, SC) by the change state by event e1.

Then, the state of a system serves as (SA, S2, SC) by the change state by event e1 further.
This is in the state passed until now, and it stops depth priority search and it shifts from it to search of the following change state.

Next, the change state by event e2 is considered following event e1 from an initial state as a change state to search, a system will change to a state (SA, S1, SC) by the change state by these events.
This state is an initial state, since it came to the state where it passed until now, it stops depth priority search, and it shifts from it to search of the following change state.

Next, the change state by event e3 is considered following event e1 from an initial state as a change state to search, a system changes in the state (SA, EB, SC) by the change state by these events.
Since the abnormal condition was reached by this change state, search is ended.

It can confirm that the change state sequence (e1, e3) which reaches from an initial state to an abnormal condition exists by the result of this search.

### [Embodiment 6]

It may inspect whether a change state sequence that reaches from an initial state to an abnormal condition, using the breadth-first search algorithm in consideration of a loop, exists as other examples of abnormal condition reachability inspection section 23.

For example, the breadth-first search algorithm which took the loop into consideration in an order of "e1>e2>e3>i1" is used to the compound state transition diagram of the whole system of Figure 11.

First, a system changes from an initial state (SA, S1, SC) to a state (SA, S2, SC) by the change state by event e1.

A system stops with an initial state by internal processing i1.

Then, a system changes from an initial state to a state (SA, S2, SC) by the change state by event e1 following event e1.

A system changes from an initial state to a state (SA, S1, SC) by the change state by event e2 following event e1.

A system changes from an initial state to a state (SA, EB, SC) by the change state by event e3 following event e1.
Since the abnormal condition was reached, search is ended.

It can check that the change state sequence (e1, e3) which reaches from an initial state to an abnormal condition exists from the result of this search.

### [Embodiment 7]

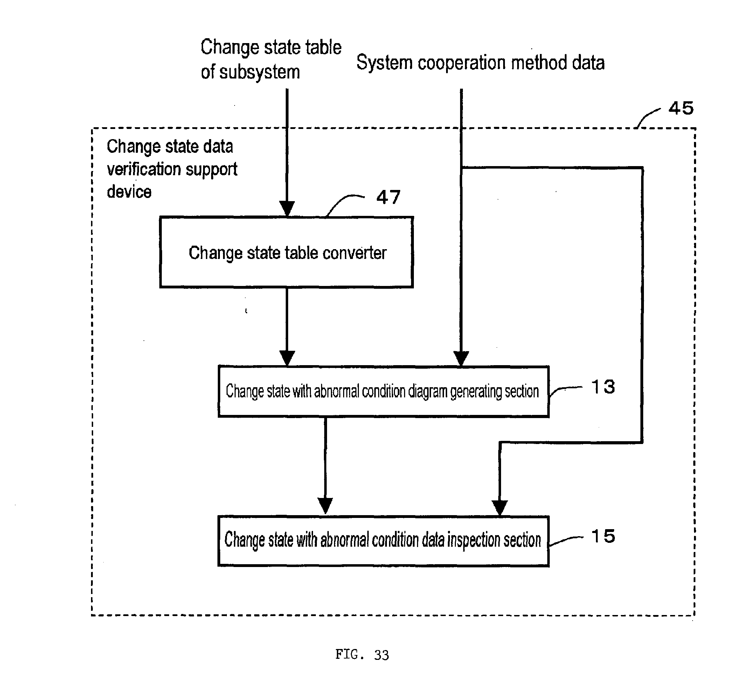

Change state data verification support device 45 described in Figure 33 has state transition table conversion part 47 which changes the state transition table of a subsystem into a state transition diagram.
Change state data verification support device 45 verifies by generating a state transition with an abnormal condition diagram based on the state transition diagram produced by changing by state transition table conversion part 47.

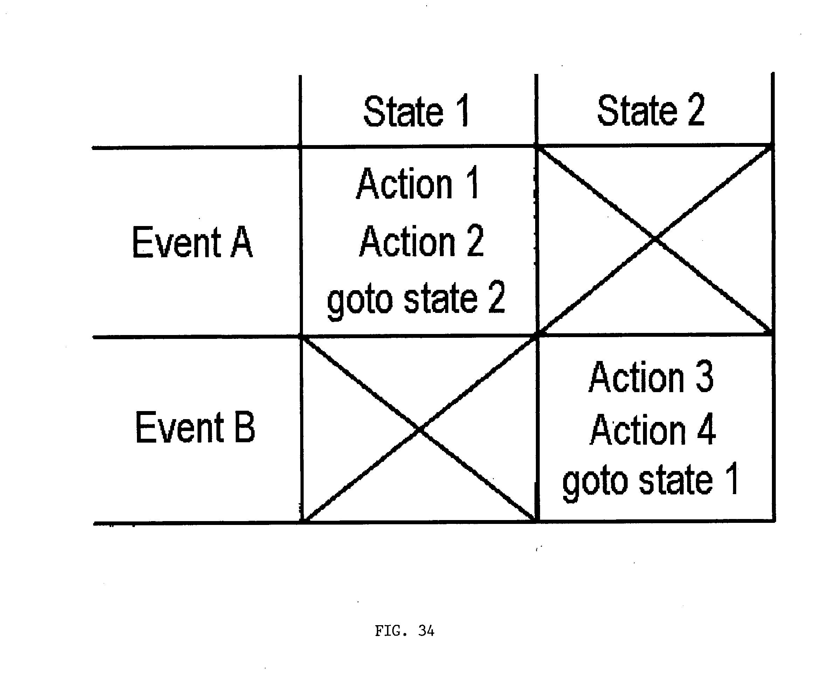

Here, as shown in Figure 34, a state transition table shows the group of a state to one axis, and shows the group of an event to the axis of another side.
A state transition table is a table which described the action group when the event is received in the state to the block which becomes settled in a state and an event.
The described action group is state change action only the last.
In Figure 34, state change action in the block which becomes settled in state 1 and event A is in "go to state 2", and state change action in the block which becomes settled in state 2 and event B is in "go to state 1."
When a designer judges that the event set in a certain state does not occur, the mark of x mark etc. is attached to that block, and this block is called an abnormal block.
In Figure 34, the block which becomes settled in state 1, the block which becomes settled in event B, state 2, and event A is an abnormal block.

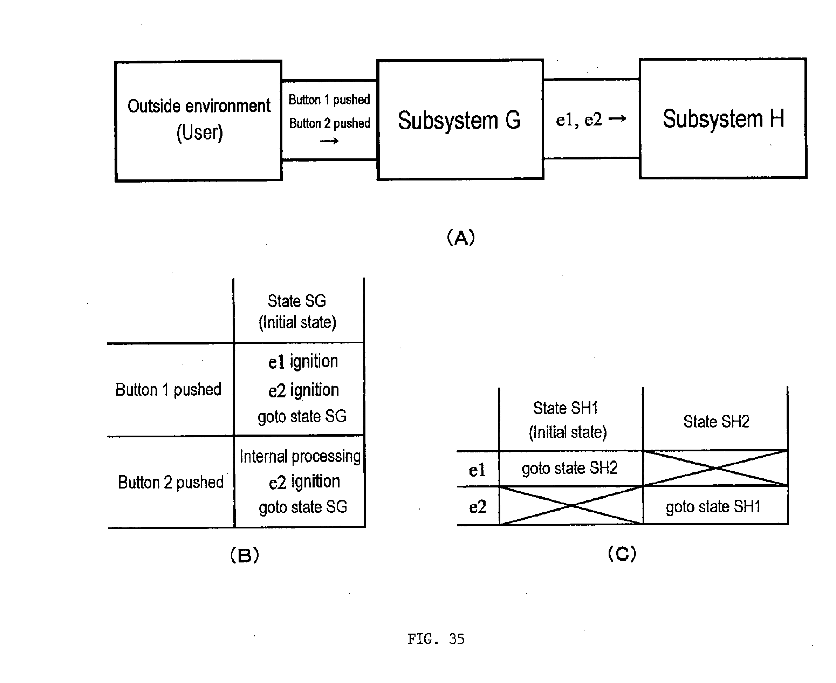

Figure 35 is a Figure showing the example of between outside environment and a system and the state transition table of cooperation between systems, and each subsystem.
As shown in (A) of Fig. 35, an outside environment (user) ignites an event (pushing button 1 and pushing button 2) and sends information to subsystem G about the event namely (pushing button 1 and 2).
Subsystem G ignites events e1 and e2, and sends these events to subsystem H.

(B) of Figure 35 is a Figure showing the state transition table of subsystem G.
The initial state of subsystem G is in state SG.
If an event (pushing button 1) is received in state SG, event e1 will be ignited first, then event e2 will be ignited, and it will change to state SG after that (since the before changing state is in state SG, a state does not change).
If an event (pushing button 2) is received in state SG, internal processing will be performed first, then event e2 will be ignited, and it will change to state SG after that (since present condition voice is in state SG, a state does not change).

(C) of Fig. 35 is a figure showing the state transition table of subsystem H.
The initial state of subsystem G is state SH1.
If event e1 is received in state SH1, it will shift to state SH2.
If event e2 is received in state SH2, it will shift to state SH1.
The block which becomes settled in state SH1, event e2, and state SH2 and event e1 is an abnormal block.

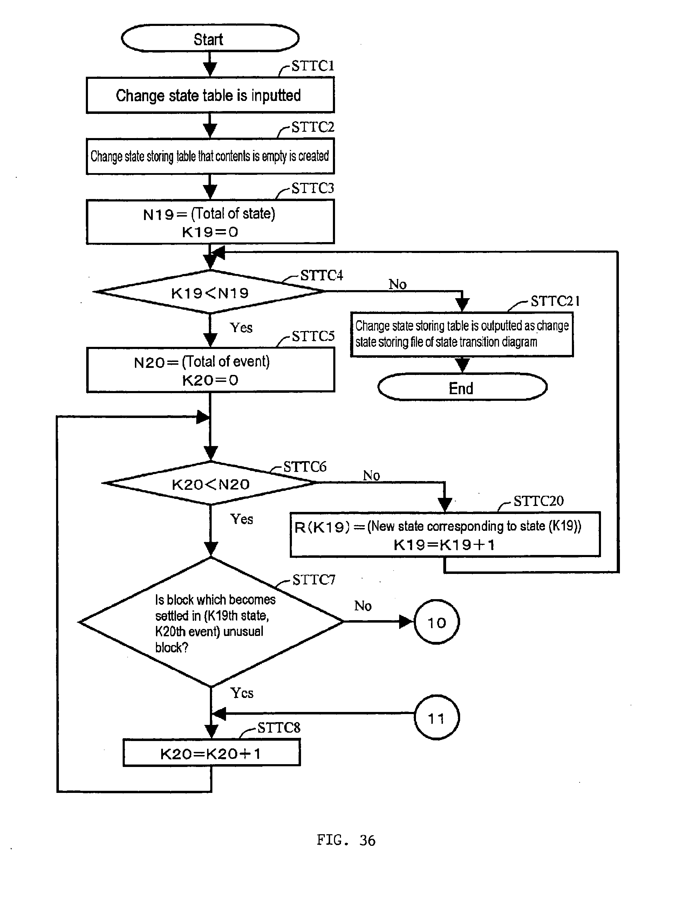

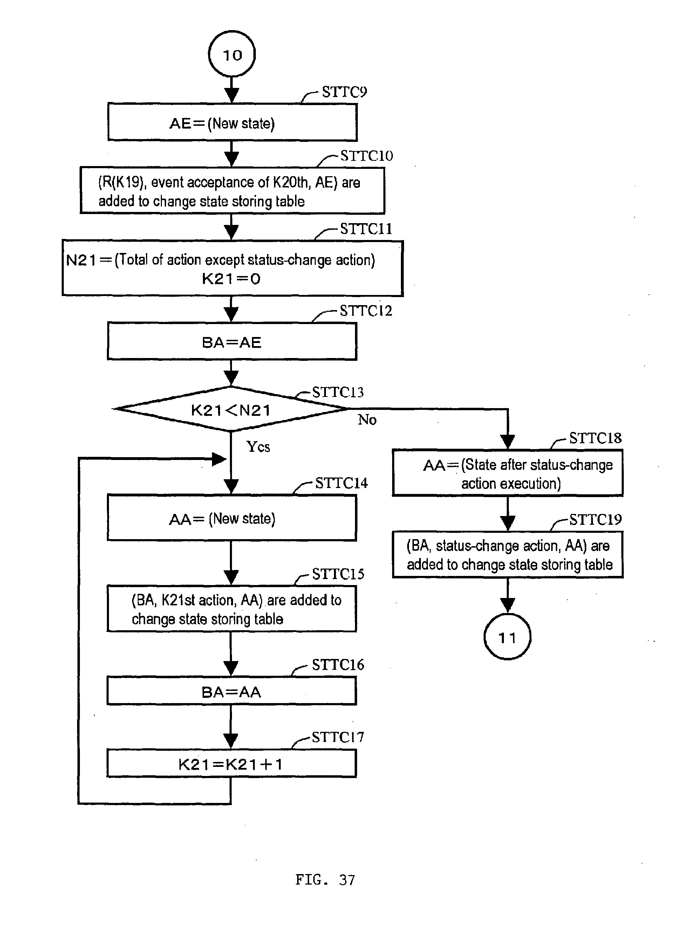

Figure 36 and Figure 37 are flow charts which give one example how to give meaning to a state transition table with a state transition diagram.

First, state transition table conversion part 47 inputs a state transition table (step STTC1 of Figure 36).

Then, state transition table conversion part 47 empties contents, and creates a change state storing table (step STTC2 of Figure 36).
Here, "empty" means that nothing is added.

State transition table conversion part 47 makes N19 the total of a state, and sets K19 to 0 (step STTC3 of Figure 36).
Here, it is assumed that the state of a state transition table is in state 0, ..., state (K19), ..., state (N19-1).

Then, state transition table conversion part 47 compares and judges the value of K19 and N19 (step STTC4 of Figure 36).
If the value of K19 is smaller than the value of N19, step STTC5 of Figure 36 will be processed, if not small, a change state storing table will be outputted as a change state storing file of a state transition diagram, and processing of Figure (step STTC21 of Figure 36) 36 will be ended.

In step STTC5 of Figure 36, state transition table conversion part 47 makes N20 the total of an event, and sets K20 to 0.

Then, state transition table conversion part 47 judges by comparing the value of K20 and N20 (step STTC6 of Figure 36).
If the value of K20 is smaller than the value of N20, step STTC7 of Figure 36 will be processed.
If not small, R (K19) will be changed into the new state corresponding to a state (K19), the increase of the value of K19 in "1" is carried out, and it returns to judgment processing of step STTC4 of Figure (step STTC20 of Figure 36) 36.

In step STTC7 of Figure 36, the block in which state transition table conversion part 47 becomes settled in a K19th state and a K20th event judges an abnormal block.
If it is an abnormal block, step STTC8 of Figure 36 will be processed, and if it is not an abnormal block, step STTC9 of Figure 37 will be processed.

In step STTC8 of Fig. 36, state transition table conversion part 47 carries out the increase of K20 in "1", and returns to judgment processing of step STTC6 of Fig. 36.

In step STTC9 of Fig. 37, state transition table conversion part 47 changes AE into a new state.
This AE expresses the state after event acceptance.

Then, state transition table conversion part 47 makes R (K19) a before changing state, event acceptance of a K20th event is made into a change state name, and the group which makes AE an after changing state is added to a change state storing table (step STTC10 of Figure 37).

Then, state transition table conversion part 47 makes N21 the total of action except state change action, and sets K21 to 0 (step STTC11 of Figure 37).

Then, state transition table conversion part 47 sets BA to AE (step STCC12 of Fig. 37).
BA is in the state before action execution.

Then, state transition table conversion part 47 judges by comparing the value of K21 and N21 (step STTC13 of Figure 37).
If the value of K21 is smaller than the value of N21, step STTC14 of Figure 37 will be processed, and if not small, step STTC18 of Figure 37 will be processed.

In step STTC14 of Figure 37, state transition table conversion part 47 changes AA into a new state.
AA is in the state after action execution.

Then, state transition table conversion part 47 makes BA a before changing state, and makes K21th action a change state name.
State transition table conversion part 47 adds the group which changes AA into an after-changes state to a change state storing table.

### (Step STTC15 of Fig. 36)

State transition table conversion part 47 sets BA to AA (step STTC16 of Figure 36), carries out the increase of the value of K21 in "1", and returns to judgment processing of step STTC13 of Figure (step STTC17 of Figure 36) 36.
BA is in the state after action execution.

In step STTC18 of Figure 37, state transition table conversion part 47 changes AA into the state after state change action execution.
AA is in the state after action execution.
Then, BA is made into a before changing state, state change action is made into a change state name, and the group which makes AA an after changing state is added to a change state storing table (step STTC19 of Figure 36).
And it returns to processing of step STTC8 of Figure 36.

By the method shown in Figure 36 and Figure 37, processing to the state transition table of the subsystem shown in Figure 35 is performed as follows.

First, state Rn which can receive event groups is assigned on a state transition diagram to each state n of a state transition table.

Then, state Uevt0 is assigned on a state transition diagram to event evt of the line which does not become an abnormal block in the sequence of state n.
Event acceptance of evt is assigned as changes to state Uevt0 from state Rn.

Then, in the block which becomes settled in state n and event evt, state UevtK (position from action in the block in which K begins from 1) is assigned on a state transition diagram to actions (event ignition or internal processing) other than state change action.
The Kth action (event ignition or internal processing) is assigned from the top in a block as changes to state UevtK from state Uevt (K-1).

Finally, when state change action changes a state into state m by the Nth action, this state change action (internal processing) is assigned as changes to state Rm from state Uevt (N-1).

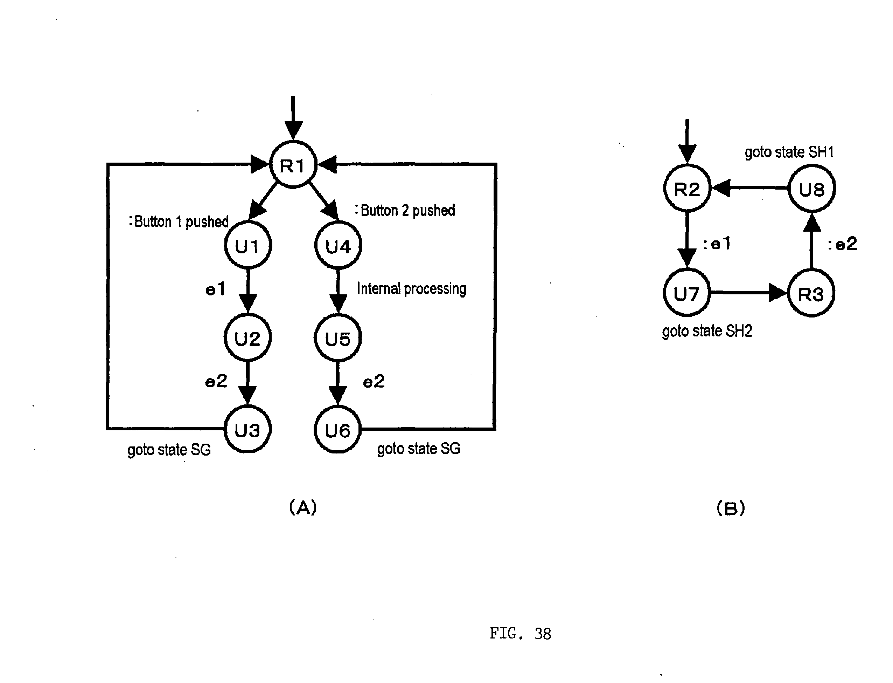

In the case of subsystem G, the state which can receive the event groups corresponding to state SG is in state R1 of (A) of Figure 38.
Since there is no unusual block in the sequence of state SG in (B) of Figure 35, the above-mentioned processing will be performed to the block which becomes settled in event" button 1 push" and "button 2 push."
State to event " button 1 pushed" Uevt0, ..., Uevt(N-1) are conditions U1, U2, U3, is shown in Fig 38 (A).
Satate to event " button 2 pushed" Uevt0, ..., Uevt(N-1) are conditions U1, U2, U3, is shown in Fig 38 as U4, U5 and U6 (A).

In the case of subsystem H, the states which can receive the event groups corresponding to state SH1 and SH2 are state R2 and R3 respectively of (B) of Fig. 38.
In (C) of Fig. 35, the block which does not turn into an abnormal block is, in the case of state SH1, settled in event e1 and in the case of state SH2, settled in event e2.
When the above-mentioned processing is performed to the block which is settled in state SH1 and event e1, state Uevt0, ..., Uevt (N-1) are in state U7 of (B) of Fig. 38. When the above-mentioned processing is performed to the block which is settled in state SH2 and event e2, state Uevt0, ..., Uevt (N-1) are in state U8 of (B) of Fig. 38.

If it argues about the system cooperation method on the state transition diagram obtained by having changed, following two can be considered as the example.
The 1st, state R1 of subsystem G is in the acceptable state of event groups {button 1 pushed and button 2 pushed}, and state R2 of subsystem H and R3 are in the acceptable state of event groups {e1, e2}.
The 2nd is generating simultaneously non-environmental event ignition of the non-environmental event of the same name, and non-environmental event acceptance.

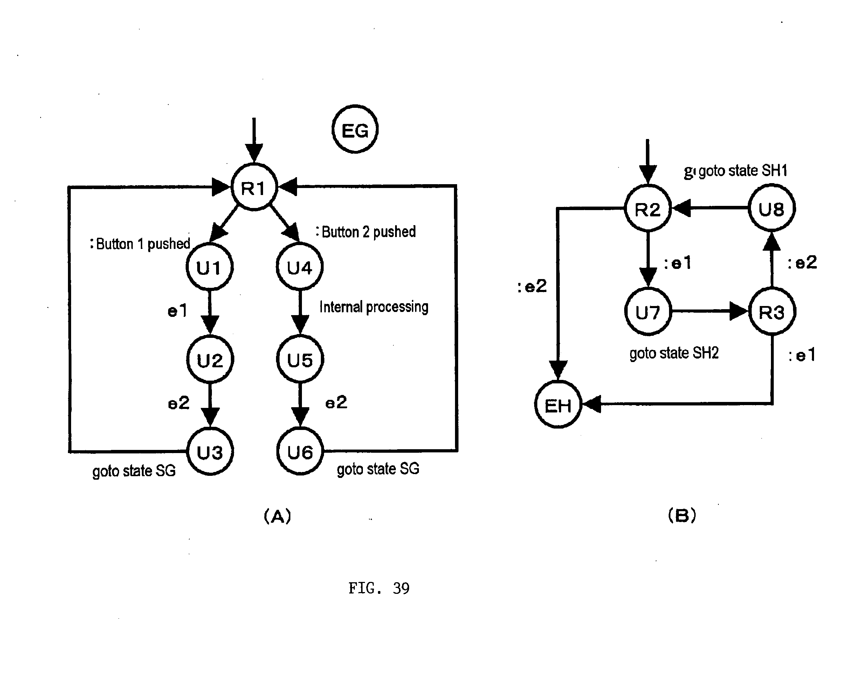

State transition with an abnormal condition diagram generation part 13 generates a state transition with an abnormal condition diagram based on the state transition diagram which changed by state transition table conversion part 47, and was generated.
The state transition with an abnormal condition diagram of subsystems G and H generated by state transition with an abnormal condition diagram generation part 13 is set to (A) of Figure 39, and (B), respectively.

Compound state transition diagram generation part 17 generates a compound state transition diagram based on the generated state transition with an abnormal condition diagram.

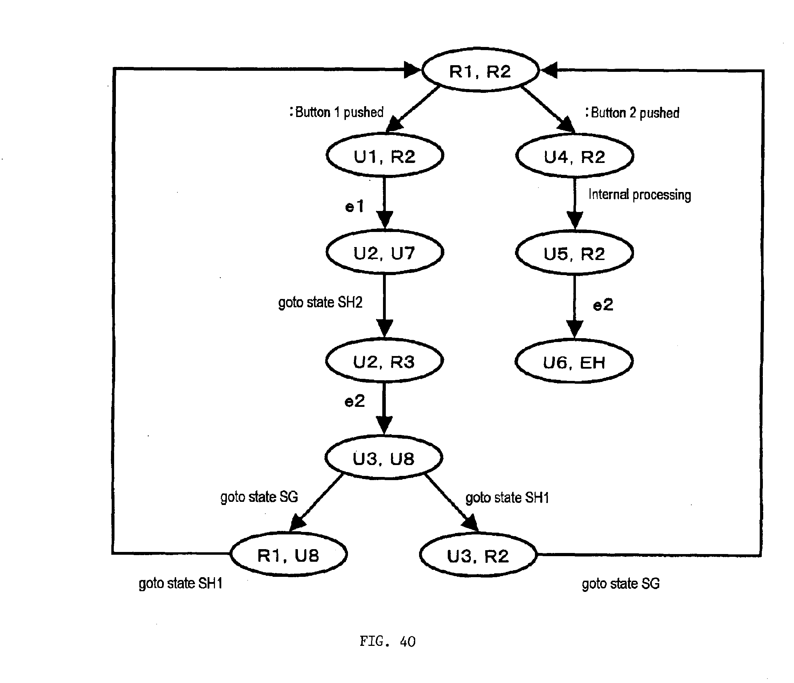

Since the initial states of subsystems G and H are R1 and R2, respectively, system-wide initial states are (R1, R2) (the parenthesis is omitted in Figure 40).
The active change state from R1 or R2 is environmental event acceptance of event" button 1 pushed" and "button 2 pushed", and a passive change state is non-environmental event acceptance of event e1.

In the system cooperation method, non-environmental event ignition of the non-environmental event of the same name and non-environmental event acceptance are carried out to generating simultaneously.
Therefore, the change state from (R1, R2) is only environmental event acceptance of "button 1 pushed" and "button 2 pushed."

It changes to (U1, R2) by a change state called environmental event acceptance of "(R1, R2) to button 1 pushed."
The active change state from U1 or R2 is non-environmental event ignition of event e1, and a passive change state is non-environmental event acceptance of event e1.
Therefore, based on the above-mentioned system cooperation method, the change state from (U1, R2) is non-environmental event ignition (non-environmental event acceptance) of event e1.

The compound state transition diagram of the whole system similarly shown in Figure 40 is obtained.

Compound state transition diagram inspection section 19 inspects the compound state transition diagram generated by compound state transition diagram generation part 17.
Indication area 21 displays the output of compound state transition diagram inspection section 19.

Trivial changes distinction part 27 takes event acceptance of the horizontal axis of the state transition table of the subsystem with which a user is interested as a group of the important change state used as an input.
Then, it understands whether a problem state changes sequence moves in which block top on this subsystem, and is effective in the case of debugging.

A data structure called BDD (Binary Decision Diagram) is used for description of a state transition diagram, symbolic model inspection art is used for abnormal condition reachability inspection section 23, are also considered.

### [Embodiment 8]

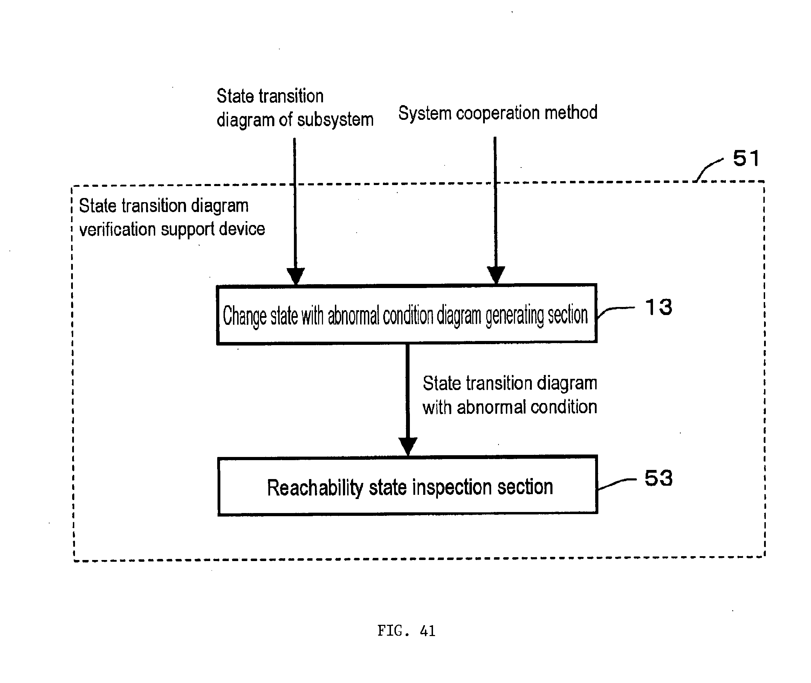

Figure 41 is a schematic block diagram showing other examples of verification support device 1 of Figure 1.
In Figure 41, state transition diagram verification support device 51 verifies the state where there are no verification and reachability of the changes to the abnormal condition of a system.

State transition diagram verification support device 51 is provided with state transition with an abnormal condition diagram generation part 13 and state inspection section 53 which can be reached.

State transition with an abnormal condition diagram generation part 13 generates a state transition with an abnormal condition diagram based on the state transition diagram and the system cooperation method of a subsystem.
Here, suppose that the state transition with an abnormal condition diagram was generated by processing by the flow chart of Figure 29.

As mentioned above, the state transition with an abnormal condition diagram of (C) of Figure 32 is generated by processing by the flow chart of Figure 29 to the state transition diagram of subsystem F (refer to (A) of Figure 30).
The change state storing file of this state transition with an abnormal condition diagram is (B) of Figure 32.

State inspection section 53 which can be reached verifies the state where there are no verification and reachability of the changes to the abnormal condition of a system, based on the state transition with an abnormal condition diagram of the subsystem generated by state transition with an abnormal condition diagram generation part 13.

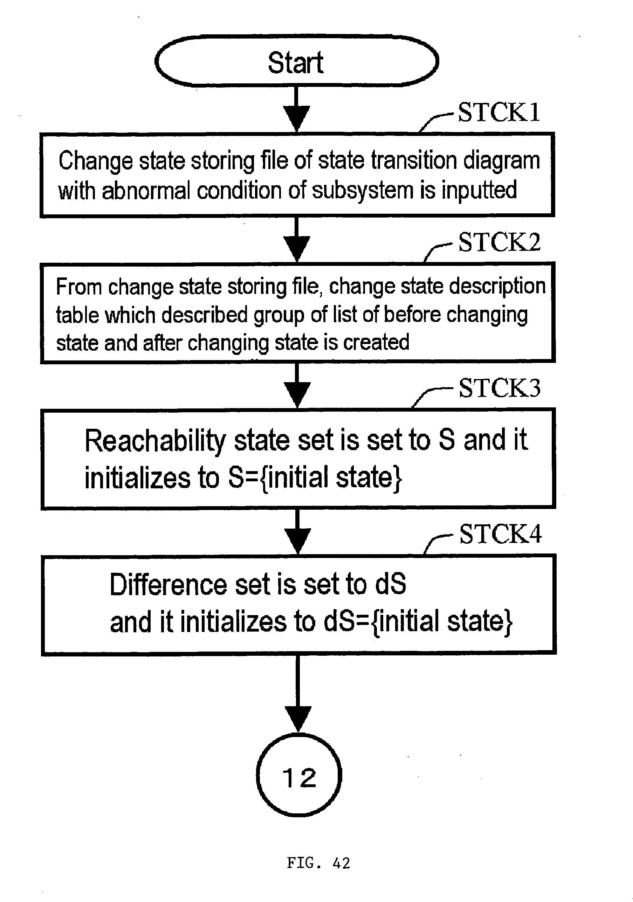

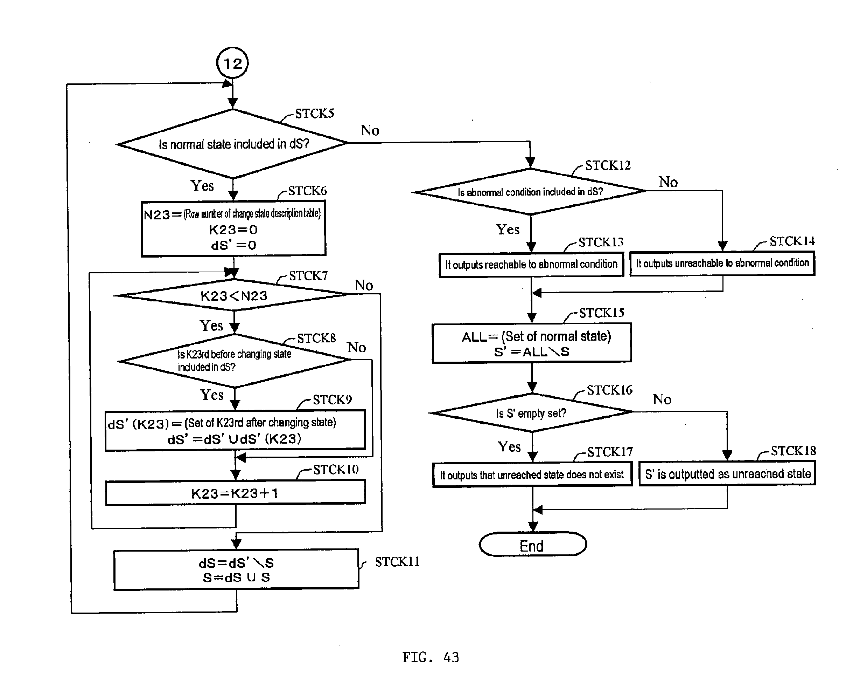

Figure 42 and Figure 43 are flow charts showing operation of state inspection section 53 which can be reached.

First, state inspection section 53 which can be reached inputs the change state storing file of the state transition with an abnormal condition diagram of a subsystem (step STCK1 of Figure 42).

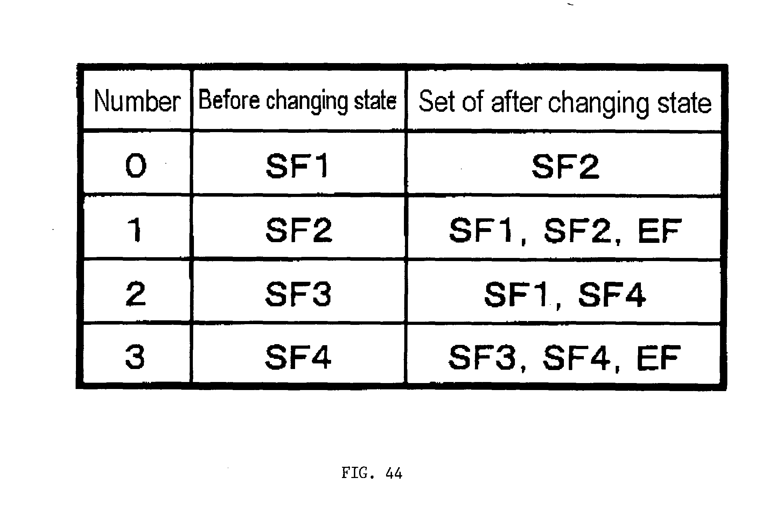

Then, state inspection section 53 which can be reached creates the change state description table which described the group of the list of a before changing state and after changing states from a change state storing file (step STCK2 of Figure 42).
Here, a change state description table is expressed with a group with a set of the after changing state corresponding to the before changing state in a change state storing file, and the before changing state concerned as shown in Figure 44.

Then, state inspection section 53 which can be reached sets a reachability state set to S, and initializes with S= {initial state} (step STCK3 of Figure 42).
In the example of (C) of Figure 32, it initializes with S= {SF1}.

Then, state inspection section 53 which can be reached sets a difference set to dS, and initializes with dS= {initial state} (step STCK4 of Figure 42).

Then, state inspection section 53 which can be reached judges whether a normal state is included in dS (step STCK5 of Figure 43).
If a normal state is included in dS, step STCK6 of Figure 43 is processed, and if not contained, step STCK12 of Figure 43 will be processed.

In step STCK6 of Figure 43, state inspection section 53 which can be reached makes N23 the number of sequences of a change state description table, sets K23 to 0, and sets dS' to 0.

Then, state inspection section 53 which can be reached judges by comparing the value of K23 and N23 (step STCK7 of Figure 43).
If the value of K23 is smaller than the value of N23, step STCK8 of Figure 43 will be processed, and if not small, step STCK11 of Figure 43 will be processed.

In step STCK8 of Figure 43, state inspection section 53 which can be reached judges whether a K23th before changing state is contained in dS.
If contained, step STCK9 of Figure 43 is processed, and if not contained, step STCK10 of Figure 43 will be processed.

In step STCK9 of Figure 43, state inspection section 53 which can be reached considers dS' (K23) as a set of a K23th after changing state, and newly makes dS' the set union of dS' and dS' (K23).
And step STCK10 of Figure 43 is processed.

In step STCK10 of Figure 43, state inspection section 53 which can be reached increases the value of K23 one time, and returns to judgment processing of step STCK7 of Figure 43.

In step STCK11 of Figure 43, state inspection section 53 which can be reached sets to dS the thing except the element which belongs to set S from set dS', and newly sets the set union of dS and S to S.
And it returns to judgment processing of step STCK5 of Figure 43.

In step STCK12 of Figure 43, state inspection section 53 which can be reached judges whether an abnormal condition is included in S.
If an abnormal condition is included, it will output that attainment is possible to an abnormal condition (step STCK13 of Figure 43), and step STCK15 of Figure 43 is processed.
If an abnormal condition is not included and an abnormal condition will not be reached, it will output (step STCK14 of Figure 43), and step STCK15 of Figure 43 is processed.

In step STCK15 of Figure 43, state inspection section 53 which can be reached sets a set of a normal state to ALL, and makes S' the thing except the element which belongs to set S from ALL.

Then, in state inspection section 53 which can be reached, S' judges an empty set (step STCK16 of Figure 43).
It will output, if it is an empty set and the state where it does not reach does not exist, and processing of Figure (step STCK17 of Figure 43) 43 is ended.
If it is not an empty set, S' will be outputted as a state where it does not reach and processing of Figure (step STCK18 of Figure 43) 43 will be ended.

As mentioned above, state inspection section 53 which can be reached can perform inspection of a possibility of reaching an abnormal condition, and detection in the state where it does not reach.

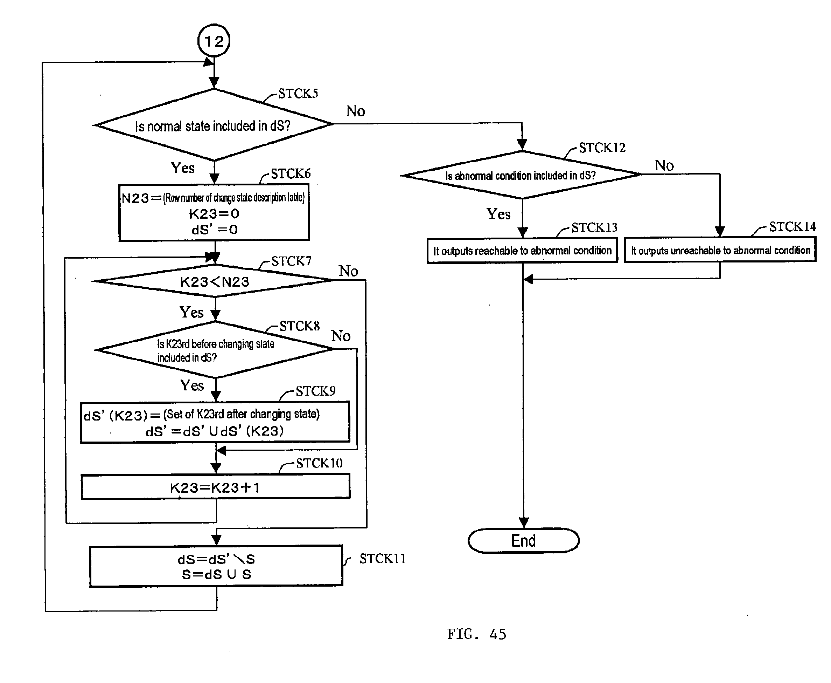

State inspection section 53 which can be reached can inspect only the abnormal condition reachability of a system by processing the flow chart of Figure 42 and Figure 45.
The flow chart of Figure 45 removes processing of Steps STCK15-STCK18 in the flow chart of Figure 43.

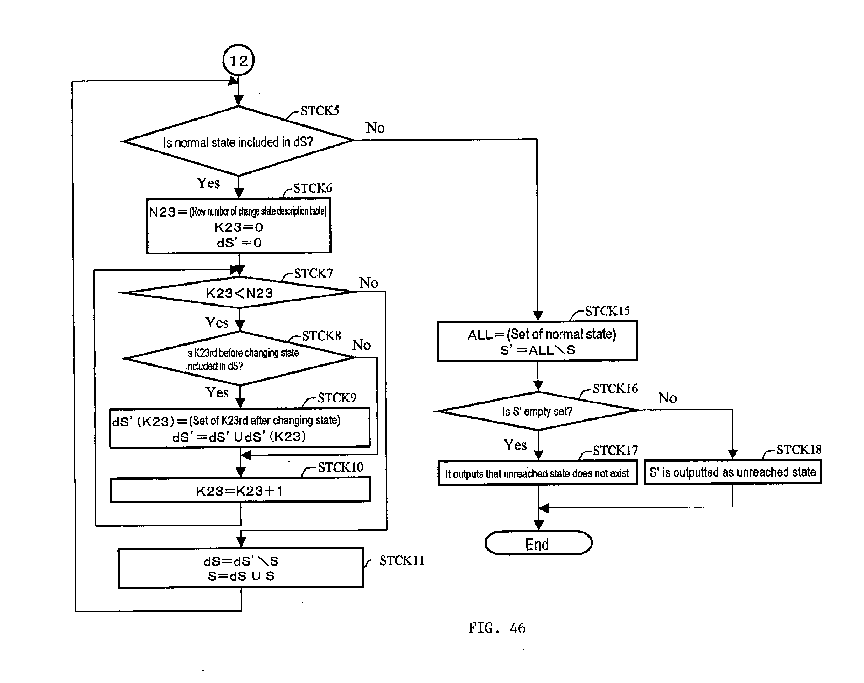

State inspection section 53 which can be reached can detect only the state where it does not reach, by processing the flow chart of Figure 42 and Figure 46.
The flow chart of Figure 46 removes processing of Steps STCK12-STCK14 in the flow chart of Figure 43.

Inspection of the reachability to the abnormal condition from a system-wide initial state and detection in the state where it does not reach can be performed by performing same processing to a compound state transition diagram.

## Claims

1. A verification support device which supports verification of the before changing state of plural subsystems which constitute a system , relating data which can specify the relation between the change state data which can specify an after changing state and change conditions, and a subsystem, comprising;
a state transition with an abnormal condition data generation means which adds automatically the data which can specify the change state to an abnormal condition to said change state data, and generates state transition with an abnormal condition data,
a verification support device provided with the change state data inspection means with an abnormal condition which inspects the state
where it may reach by the change state from the initial state of a system based on said change state data with an abnormal condition, and said relating data.

2. A verification support device which supports verification of the before changing state of plural subsystems which constitute a system,
relating data which can specify the relation between the change state data which can specify an after changing state and change conditions, and a subsystem, comprising;
the data which can specify the change state it was presupposed that could not be produced by a system designer is not contained in said change state data,
or it is contained identifiable to the data which can specify the change state it was presupposed that the data which can specify the change state it was presupposed that could not be produced by a system designer might arise by a system designer,
the data which can specify the combination of a state acceptable about each event of event groups and said event groups as said relating data is contained,
when the change state which makes it changes conditions to have received the event concerned to said change state data about each event of said event groups, and makes the state which can receive the event concerned a before changing state cannot arise by a system designer,
the state transition with an abnormal condition data generation means which adds automatically the data which makes it changes conditions to have received the event concerned to said change state data, makes the state which can receive the event concerned a before changing state, and makes an abnormal condition an after changing state, and generates state transition with an abnormal condition data,
the state transition with an abnormal condition data inspection means which inspects the state where it may reach by the change state from the initial state of a system based on said state transition with an abnormal condition data and said relating data.

3. A verification support device according to claim 2, the data which can specify the change state group which changes simultaneously is contained in said relating data, and said state transition with an abnormal condition data inspection means comprising;
data which can specify the change state judged that it may produce by said system designer,
and data which can specify the change state to the abnormal condition added by said state transition with an abnormal condition data generation means,
and the compound change state data generation means which generates the compound change state data which can specify the before changing state which may reach by the change state from the initial state of a system based on the data which can specify the change state group which changes simultaneously, an after changing state, and the changes conditions which may be satisfied,
a compound change state data inspection means which inspects the state where it may reach by changes of the state from the initial state of a system based on compound change state data.

4. A verification support device according to claim 3, with which said compound change state data inspection means has an abnormal condition reachability inspection means which judges whether an abnormal condition is included in said state where it may reach.

5. A verification support device which supports verification of relating data which can specify the relation between the change state data which can specify the before changing state of plural subsystems when a system is constituted, an after changing state, and changes conditions, and a subsystem, comprising;
the data which can specify the change state group which changes simultaneously as said relating data is contained, the state transition with an abnormal condition data generation means which adds the data which can specify the change state to an abnormal condition to said change state data, and generates state transition with an abnormal condition data,
the state transition with an abnormal condition data inspection means which inspects the state where it may reach by the change state from the initial state of a system based on said state transition with an abnormal condition data and said relating data,
the display control means on which information is displayed to a display,
said state transition with an abnormal condition data inspection means having;
a compound change state data generation means which generates the compound change state data which can specify the before changing state which may reach, an after changing state, and the changes conditions which may be satisfied, based on the data which can specify the change state group which changes simultaneously, and said state transition with an abnormal condition data,
with the change state from the initial state of a system,
the compound change state data generation means which generates the compound change state data which can specify the before changing state which may reach, an after changing state, and the changes conditions which may be satisfied,
the state where it may reach by changes of the state from the initial state of a system based on compound change state data,
said compound change state data inspection means has an abnormal condition reachability inspection means which judges whether an abnormal condition is included in said state where it may reach,
said display control means gives priority to and displays the information which shows the change state near an abnormal condition among the change states from an initial state to an abnormal condition to a display, when it is judged that an abnormal condition is included by said abnormal condition reachability inspection means.

6. A verification support device according to claim 5, in which the change state which said display control means has a trivial changes distinction means to distinguish the change state specified as an important change state among the change states to an abnormal condition and the other change state, and was specified as an important change state to the display is given priority to and displayed.

7. A verification support device according to claim 3 or 4, which has an acceptable event refusal-of-receipt inspection means which judges whether the data about an event without the state or the acceptance possibility that said compound change state data inspection means does not have reachability in said change state data is contained.

8. A verification support device according to any of Claims 2, 3, 4, and 7 in which said state transition with an abnormal condition data generation means generates state transition with an abnormal condition data based on the change state data generated by said change state data generation means,
in the state to the combination of the event which may be produced in the state where said subsystem can take, and said subsystem, comprising;
the processing by the event is provided with the change state data generation means which generates said change state data based on the event processing data which can specify the processing performed when the event occurs in not existing or its state.

9. A verification support device according to claim 8, in which said event processing data is data corresponding to a state transition table, and is data corresponding to a state transition diagram in said change state data.

10. A verification support method which supports verification of relating data which can specify the relation between the change state data which can specify the before changing state of plural subsystems when a system is constituted, an after changing state, and changes conditions, and a subsystem, comprising;
a step which a state transition with an abnormal condition data generation means adds automatically the data which can specify the change state to an abnormal condition to said change state data, and generates state transition with an abnormal condition data,
the step which inspects the state where a state transition with an abnormal condition data inspection means may reach by the change state from the initial state of a system based on said state transition with an abnormal condition data and said relating data,

11. A program adapted to make a computer perform the verification support method according to claim 10.

12. A recording medium on which the program according to claim 11 is recorded so that a computer can run.
